(19) Europäisches Patentamt
European Patent Office
Office européen des brevets

(11) **EP 2 977 281 B1**

(12) **EUROPEAN PATENT SPECIFICATION**

(45) Date of publication and mention
of the grant of the patent:
**13.11.2019 Bulletin 2019/46**

(51) Int Cl.:
**B60T 8/176** (2006.01)   **B60T 8/1755** (2006.01)

(21) Application number: **14768740.4**

(22) Date of filing: **28.02.2014**

(86) International application number:
**PCT/JP2014/001096**

(87) International publication number:
**WO 2014/147976 (25.09.2014 Gazette 2014/39)**

(54) **BRAKE CONTROL DEVICE AND SADDLE-TYPE VEHICLE COMPRISING SAME**

BREMSSTEUERUNGSVORRICHTUNG UND SATTELFAHRZEUG DAMIT

DISPOSITIF DE COMMANDE DE FREIN ET VÉHICULE DE TYPE À SELLE COMPRENANT CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2013 JP 2013060948**

(43) Date of publication of application:
**27.01.2016 Bulletin 2016/04**

(73) Proprietor: **Yamaha Hatsudoki Kabushiki Kaisha Iwata-shi, Shizuoka 438-8501 (JP)**

(72) Inventors:
• **NISHIMURA, Masaya**
  **Iwata-shi**
  **Shizuoka 438-8501 (JP)**
• **MIZUTANI, Takaaki**
  **Iwata-shi**
  **Shizuoka 438-8501 (JP)**

(74) Representative: **Stöckeler, Ferdinand et al Schoppe, Zimmermann, Stöckeler Zinkler, Schenk & Partner mbB Patentanwälte Radlkoferstrasse 2 81373 München (DE)**

(56) References cited:
**EP-A2- 2 554 444      WO-A1-2012/086289**
**WO-A1-2013/014945    JP-A- H04 287 753**
**JP-A- 2009 035 120     JP-A- 2009 241 696**
**JP-A- 2011 011 589**

Remarks:
The file contains technical information submitted after the application was filed and not included in this specification

**Description**

[Technical Field]

The present invention relates to a brake control device that adjusts brake force supplied to a wheel, and a straddled vehicle including the brake control device.

[Background Art]

An ABS (Antilock Brake System) prevents slip at a time of sudden braking and enables a brake distance of a vehicle to be shortened and a handle operation at a time of braking by automatically controlling a rotation of a wheel. In recent years, the ABS is provided in not limited to four-wheeled automobiles but various vehicles such as a motorcycle.
During turning of the vehicle, lateral force is generated between the wheel and a road surface. When sufficient lateral force is not generated, lateral sliding of the vehicle occurs. In particular, the motorcycle tilts in a lateral direction during the turning. The larger a tilt angle (a bank angle) of the motorcycle is, the more likely the lateral sliding occurs. Therefore, various techniques for inhibiting an occurrence of the lateral sliding during the turning of the vehicle such as the motorcycle have been suggested.
In a brake control device described in Patent Document 1, a yaw rate measured by a yaw rate sensor is integrated over time, so that the tilt angle (the bank angle) of a motorcycle in the lateral direction is determined. A sliding threshold value used for an antilock brake operation is set such that the larger the tilt angle of the motorcycle is, the smaller the sliding threshold value is. In this case, a brake effect quickly decreases when the tilt angle of the motorcycle increases.
Further, in an antilock brake device described in Patent Document 2, a target slip ratio used for the antilock brake operation is set such that the larger the bank angle of a motorcycle is, the smaller the target slip ratio is. In this case, the target slip ratio is inhibited as the bank angle increases.
Further, in an ABS described in Patent Document 3, an effective limit value used for the antilock brake operation (a value for starting to decrease a brake pressure at the time of braking) changes in response to a result of measurement of a tilt position of an auto-bicycle. For example, the effective limit value of the ABS is set small as the tilt of the auto-bicycle increases. In this case, the brake pressure is gradually decreased before the tilt of the auto-bicycle in the lateral direction becomes larger.
Further, in a sliding prevention control system described in Patent Document 4, a tilt posture angle of a motorcycle is calculated. When the calculated tilt posture angle is not less than a dangerous threshold value, the brake pressure of the front wheel is maintained by an adjuster of the antilock brake system before reaching a lock pressure to be expected.

[Patent Document 1] JP 2004-155412 A
[Patent Document 2] JP 2590024 Y
[Patent Document 3] JP 2-216355 A
[Patent Document 4] JP 7-2077 A

WO 2013/014945 A1 discloses an attitude controller eliminating a skid motion of a banked vehicle when travelling through a curve. The attitude controller includes a lateral acceleration sensor configured to obtain lateral acceleration, a bank angle detector configured to detect a bank angle of the vehicle, and a longitudinal force controller. Upon detection of a skid motion of the front wheel or the rear wheel, the longitudinal force controller decreases the longitudinal force of each of the wheels.

[Summary of Invention]

[Technical Problem]

The techniques described in the above-mentioned Patent Documents 1 to 4 cause the ABS to be controlled according to the tilt angle of the motorcycle. However, maximum lateral force that can be generated between the wheel and the road surface during the turning of the motorcycle changes depending on states of the road surface and the wheel. For example, when the road surface is wet or when a surface of the wheel is worn out, the maximum lateral force is small. Therefore, even when the ABS is controlled by the techniques described in Patent Documents 1 to 4, the lateral sliding of the vehicle is sometimes not inhibited depending on the states of the road surface and the wheel. Therefore, a rider is required to be skilled for the brake operation during the turning.
An object of the present invention is to provide a brake control device that enables a brake operation of a straddled vehicle to be smoothly and easily performed, and a straddled vehicle including the brake control device.

[Solution to Problem]

The present invention provides a brake control device according to claim 1.

(1) A brake control device according to one aspect of the present invention of a straddled vehicle having a first wheel includes a first brake device that supplies brake force to the first wheel, a longitudinal sliding detection device configured to detect a longitudinal sliding degree of the first wheel, a lateral sliding detection device configured to detect a lateral sliding degree of the first wheel, and a controller for performing a first antilock brake operation that controls the first brake device such that the longitudinal sliding degree of the first wheel detected by the longitudinal sliding detection device becomes close to a first target longitudinal sliding degree, wherein the controller performs a first correction process that corrects the first antilock brake operation to inhibit lateral sliding of the first wheel based on a result of detection of the lateral sliding detection device.

In the brake control device, the longitudinal sliding degree of the first wheel is detected by the longitudinal sliding detection device, and the lateral sliding degree of the first wheel is detected by the lateral sliding detection device. The first antilock brake operation is performed by the controller at the time of braking of the first wheel. In the first antilock brake operation, the first brake device is controlled such that the detected longitudinal sliding degree of the first wheel becomes close to the first target longitudinal sliding degree.

At this time, the first correction process is performed. In the first correction process, the first antilock brake operation is corrected such that the lateral sliding of the first wheel is inhibited based on the result of detection of the lateral sliding detection device.

When the lateral sliding degree of the first wheel is large, an amount of correction in the first correction process is increased, so that the lateral sliding of the first wheel can be inhibited while the brake force for the first wheel is ensured. Further, when the lateral sliding degree of the first wheel is small, the amount of correction in the first correction process is decreased, so that the brake force for the first wheel can be sufficiently ensured while the lateral sliding of the first wheel is inhibited. Further, the lateral sliding is unlikely to occur at the time of braking during the travelling of the vehicle in a straight line. In this case, the amount of correction in the first correction process is decreased, so that sufficient deceleration can be performed at the time of braking during the travelling of the vehicle in the straight line.

Therefore, the lateral sliding of the first wheel can be inhibited regardless of the tilt state of the vehicle and the states of the road surface and the first wheel, and the brake force for the first wheel can be ensured. As a result, the rider can smoothly and easily perform the brake operation of the straddled vehicle.

(2) The controller may correct the first antilock brake operation such that the larger the lateral sliding degree of the first wheel detected by the lateral sliding detection device is, the smaller the longitudinal sliding degree of the first wheel is, as the first correction process.

When the longitudinal sliding degree of the first wheel decreases, a margin of the maximum lateral force that can be generated between the first wheel and the road surface with respect to the lateral force required in order to prevent the lateral sliding of the first wheel increases. Thus, the larger the lateral sliding degree of the first wheel is, the more largely the lateral sliding can be inhibited. In this manner, the lateral sliding can be appropriately inhibited according to the lateral sliding degree of the first wheel.

(3) The lateral sliding detection device may detect lateral sliding acceleration of the first wheel as the lateral sliding degree of the first wheel, and the controller may correct the first antilock brake operation by changing the first target longitudinal sliding degree such that the larger magnitude of the lateral sliding acceleration of the first wheel detected by the lateral sliding detection device is, the smaller the first target longitudinal sliding degree is, as the first correction process.

In this case, when the lateral sliding degree of the first wheel is large, the first target longitudinal sliding degree is small, so that the margin of the maximum lateral force that can be generated between the first wheel and the road surface with respect to the lateral force required in order to prevent the lateral sliding of the first wheel increases. Thus, the lateral sliding of the first wheel can be inhibited while the brake force for the first wheel is ensured. Further, when the lateral sliding degree of the first wheel is small, the first target longitudinal sliding degree is large, so that an amount of decrease of the brake force for the first wheel is small. Thus, the brake force for the first wheel can be ensured while the lateral sliding of the first wheel is inhibited.

Further, at the time of braking during the travelling of the vehicle in a straight line, the lateral sliding is unlikely to occur. In this case, the first target longitudinal sliding degree increases, so that the amount of decrease of the brake force for the first wheel is small. Thus, sufficient deceleration is performed at the time of braking during the travelling of the vehicle in the straight line.

Therefore, the lateral sliding of the first wheel can be inhibited regardless of the tilt state of the vehicle and the states of the road surface and the first wheel, and the brake force for the first wheel can be ensured.

Further, it is possible to control the margin of the maximum lateral force and the brake force by changing the first target longitudinal sliding degree. Thus, it is possible to easily perform the first correction process without providing a complicated configuration and performing a complicated process.

Further, the magnitude of the lateral sliding acceleration of the first wheel is equivalent to the insufficiency of the lateral force required in order to prevent an occurrence of the lateral sliding of the first wheel, and the lateral sliding occurs due to this insufficiency. Therefore, the lateral sliding degree can be accurately detected based on the magnitude of the lateral sliding acceleration of the first wheel. Therefore, the first target longitudinal sliding degree can be accurately changed such that the margin of the maximum lateral force and the brake force are ensured based on the magnitude of the lateral sliding acceleration of the first wheel. Thus, the lateral sliding of the first wheel can be appropriately inhibited.

(4) The controller may change the first target longitudinal sliding degree such that the first target longitudinal sliding degree decreases from a third value to a fourth value smaller than the third value as the magnitude of the lateral sliding acceleration of the first wheel detected by the lateral sliding detection device increases, when the magnitude of the lateral sliding acceleration of the first wheel detected by the lateral sliding detection device is in a range between a first value and a second value larger than the first value.

In this case, when the lateral sliding acceleration of the first wheel is in a constant range, the larger the magnitude of the lateral sliding acceleration of the first wheel is, the lower the first target longitudinal sliding degree is. Thus, the lateral sliding of the first wheel can be appropriately inhibited while the brake force for the first wheel is ensured.

(5) The controller may set the first target longitudinal sliding degree to the third value when the magnitude of the lateral sliding acceleration of the first wheel detected by the lateral sliding detection device is not more than the first value.

In this case, when the magnitude of the lateral sliding acceleration of the first wheel is not more than the first value, the first target longitudinal sliding degree is kept constant at the third value. Thus, when the magnitude of the lateral sliding acceleration of the first wheel is small, the brake force for the first wheel can be sufficiently ensured while the lateral sliding of the first wheel is inhibited.

(6) The controller may set the first target longitudinal sliding degree to the fourth value when the magnitude of the lateral sliding acceleration of the first wheel detected by the lateral sliding detection device is not less than the second value.

In this case, when the magnitude of the lateral sliding acceleration of the first wheel is not less than the second value, the first target longitudinal sliding degree is kept constant at the fourth value. Thus, when the magnitude of the lateral sliding acceleration of the first wheel is large, the lateral sliding of the first wheel can be inhibited while the brake force for the first wheel is ensured.

(7) The brake control device may further include a storage that stores a correspondence relationship between the magnitude of the lateral sliding acceleration of the first wheel and a target longitudinal sliding degree, wherein the correspondence relationship may be set in advance such that the target longitudinal sliding degree decreases from the third value to the fourth value as the magnitude of the lateral sliding acceleration of the first wheel increases, and the controller may acquire the target longitudinal sliding degree corresponding to the magnitude of the lateral sliding acceleration of the first wheel detected by the lateral sliding detection device from the correspondence relationship stored in the storage, and may set the acquired target longitudinal sliding degree as the first target longitudinal sliding degree as the first correction process.

In this case, because the correspondence relationship between the lateral sliding acceleration of the first wheel and the target longitudinal sliding degree is stored in the storage, the first target longitudinal sliding degree corresponding to the lateral sliding acceleration of the first wheel can be easily set without a calculation process.

(8) The lateral sliding detection device may detect a slip angle of the first wheel as the lateral sliding degree of the first wheel, and the controller may correct the first antilock brake operation by changing the first target longitudinal sliding degree such that the larger magnitude of the slip angle of the first wheel detected by the lateral sliding detection device is, the smaller the first target longitudinal sliding degree is, as the first correction process.

In this case, the first target longitudinal sliding degree can be accurately changed such that the margin of the maximum lateral force and the brake force are ensured based on the magnitude of the slip angle of the first wheel. Thus, the lateral sliding of the first wheel can be appropriately inhibited.

(9) The straddled vehicle may further have a second wheel, and may further comprise a second brake device that supplies the brake force to the second wheel, the longitudinal sliding detection device may be configured to detect a longitudinal sliding degree of the second wheel, the lateral sliding detection device may be configured to detect a lateral sliding degree of the second wheel, and the controller may perform a second antilock brake operation for controlling the second brake device such that the longitudinal sliding degree of the second wheel detected by the longitudinal sliding detection device becomes close to a second target longitudinal sliding degree, and may perform a second correction process for correcting the second antilock brake operation by changing the second target longitudinal sliding degree such that the larger the lateral sliding degree of the second wheel detected by the lateral sliding detection device is, the smaller the second target longitudinal sliding degree is.

In this case, the second antilock brake operation is performed by the controller at the time of braking of the second wheel, and the second correction process is performed. In the second correction process, the second target longitudinal sliding degree is changed such that the larger the lateral sliding degree of the second wheel detected by the lateral sliding detection device is, the smaller the second target longitudinal sliding degree is. Thus, the lateral sliding of the second wheel is inhibited regardless of the tilt state of the vehicle and the states of the road surface and the second wheel, and the brake force for the second wheel is ensured.

Further, it is possible to control the margin of the maximum lateral force and the brake force by changing the second target longitudinal sliding degree. Thus, it is possible to easily perform the second correction process without providing a complicated configuration and performing a complicated process.

(10) The controller may increase the brake force by the second brake device to compensate at least part of an amount of decrease of the brake force by the first brake device, the amount of decrease being generated by performance of the first correction process, when the first antilock brake operation is performed and the second antilock brake operation is not performed.

In this case, during the first antilock brake operation, the decrease of the brake force for the first wheel by the performance of the first correction process is compensated by the increase of the brake force for the second wheel. As a result, the decrease of the brake force exerted on the entire straddled vehicle can be inhibited.

(11) The controller may increase the brake force by the first brake device to compensate at least part of an amount of decrease of the brake force by the second brake device, the amount of decrease being generated by performance of the second correction process, when the second antilock brake operation is performed and the first antilock brake operation is not performed.

In this case, during the second antilock brake operation, the decrease of the brake force for the second wheel by the performance of the second correction process is compensated by the increase of the brake force for the first wheel. As a result, the decrease of the brake force exerted on the entire straddled vehicle can be inhibited.

(12) The longitudinal sliding detection device may be configured to detect a slip ratio of the first wheel as the longitudinal sliding degree of the first wheel, and the controller may perform the first antilock brake operation by controlling the first brake device such that the slip ratio of the first wheel detected by the longitudinal sliding detection device becomes close to a first target slip ratio as the first target longitudinal sliding degree, and may correct the first antilock brake operation by changing the first target slip ratio such that the larger the lateral sliding degree of the first wheel detected by the lateral sliding detection device is, the smaller the first target slip ratio is, as the first correction process.

The slip ratio of the wheel can be calculated by a simple calculation formula based on the peripheral velocity of the wheel and the vehicle body velocity. Therefore, it is possible to easily perform the first antilock brake operation without providing the complicated configuration and performing the complicated process, and the first correction process can be easily performed.

(13) The longitudinal sliding detection device may be configured to detect slip ratios of the respective first and second wheels as the respective longitudinal sliding degrees of the first and second wheels, and the controller may perform the first antilock brake operation by controlling the first brake device such that the slip ratio of the first wheel detected by the longitudinal sliding detection device becomes close to a first target slip ratio as the first target longitudinal sliding degree, may perform the second antilock brake operation by controlling the second brake device such that the slip ratio of the second wheel detected by the longitudinal sliding detection device becomes close to a second target slip ratio as the second target longitudinal sliding degree, may correct the first antilock brake operation by changing the first target slip ratio such that the larger the lateral sliding degree of the first wheel detected by the lateral sliding detection device is, the smaller the first target slip ratio is, as the first correction process, and may correct the second antilock brake operation by changing the second target slip ratio such that the larger the lateral sliding degree of the second wheel detected by the lateral sliding detection device is, the smaller the second target slip ratio is, as the second correction process.

As described above, the slip ratio of the wheel can be calculated by a simple calculation formula based on the peripheral velocity of the wheel and the vehicle body velocity. Therefore, it is possible to easily perform the first and second antilock brake operations without providing the complicated configuration and performing the complicated process, and the first and second correction processes can be easily performed.

(14) A straddled vehicle according to another aspect of the present invention includes the first wheel, and the above-mentioned brake control device.

In the above-mentioned brake control device, the first antilock brake operation is corrected based on the lateral sliding degree of the first wheel. Thus, the lateral sliding of the first wheel is inhibited regardless of the tilt state of the vehicle and the states of the road surface and the first wheel, and the brake force for the first wheel is ensured. Further, sufficient deceleration is performed at the time of braking during the traveling of the vehicle in a straight line. As a result, the rider can smoothly and easily perform the brake operation of the straddled vehicle.

(15) A straddled vehicle according to yet another aspect of the present invention includes the first and second wheels, and the above-mentioned brake control device.

In the above-mentioned brake control device, the first and second antilock brake operations are corrected based on the lateral sliding degrees of the first and second wheels. Thus, the lateral sliding of the first and second wheels is inhibited regardless of the tilt state of the vehicle and the states of the road surface and the first and second wheels, and the brake force for the first and second wheels is ensured. Further, sufficient deceleration is performed at the time of braking during the travelling of the vehicle in a straight line.

As a result, the rider can smoothly and easily perform the brake operation of the straddled vehicle.

[Advantageous Effects of Invention]

The present invention enables the brake operation of the straddled vehicle to be smoothly and easily performed.

[Brief Description of Drawings]

[FIG. 1] FIG. 1 is a schematic side view of a motorcycle according to one embodiment of the present invention as viewed from the left.

[FIG. 2] FIG. 2 is a schematic plan view of the motorcycle of Fig. 1 as viewed from above.

[FIG. 3] FIG. 3 is a block diagram showing a configuration of a brake control device included in the motorcycle of Fig. 1.

[FIG. 4] FIG. 4 is a schematic diagram for explaining an adjustment operation of WC fluid pressure in a front wheel fluid pressure circuit of Fig. 3.

[FIG. 5] Fig. 5 is a block diagram for explaining a configuration and an operation of a lateral sliding acceleration detection device of Fig. 3.

[FIG. 6] Fig. 6 is a diagram for explaining a method of estimation of a vehicle body velocity of the motorcycle.

[FIG. 7] Fig. 7 is a graph for explaining a basic idea of a first embodiment.

[FIG. 8] Fig. 8 is a graph showing one example of a target slip ratio table.

[FIG. 9] Fig. 9 is a flow chart of an ABS control process based on an ABS control program according to the first embodiment.

[FIG. 10] Fig. 10 is a flow chart of the ABS control process based on the ABS control program according to the first embodiment.

[FIG. 11] Fig. 11 is a diagram showing one example of the ABS control process of when the vehicle body velocity of the motorcycle decreases due to a brake operation in the first embodiment.

[FIG. 12] Fig. 12 is a block diagram showing the configuration of the brake control device included in the motorcycle according to a second embodiment.

[FIG. 13] Fig. 13 is a graph for explaining a basic idea of the second embodiment.

[FIG. 14] Fig. 14 is a flow chart of the ABS control process based on the ABS control program according to the second embodiment.

[FIG. 15] Fig. 15 is a flow chart of the ABS control process based on the ABS control program according to the second embodiment.

[FIG. 16] Fig. 16 is a flow chart of a brake force compensation process of the step S37 of Fig. 15.

[FIG. 17] Fig. 17 is a diagram showing one example of the ABS control process of when the vehicle body velocity of the motorcycle decreases due to the brake operation in the second embodiment.

[FIG. 18] Fig. 18 is a graph showing one example of a WC fluid pressure decrease rate table.

[FIG. 19] Fig. 19 is a diagram showing one example of the ABS control process of when the vehicle body velocity of the motorcycle decreases by the brake operation in another embodiment.

[Description of Embodiments]

[1] First Embodiment

A brake control device and a straddled vehicle including the brake control device according to the first embodiment will be described with reference to drawings. In the following description, a motorcycle including the brake control device will be described as one example of the straddled vehicle.

(1) Schematic Configuration of Motorcycle

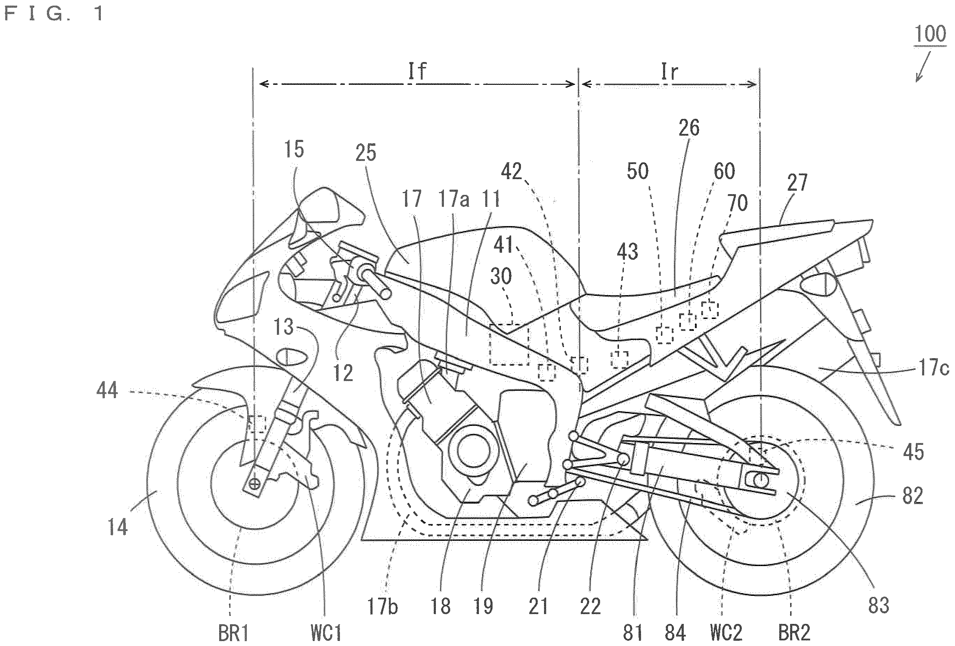

Fig. 1 is a schematic side view of the motorcycle according to one embodiment of the present invention as viewed from the left.

In the motorcycle 100 of Fig. 1, a head pipe 12 is provided at the front end of a main body frame 11. A front fork 13 is provided at the head pipe 12 to be swingable in a left-and-right direction. A front wheel 14 and a brake rotor BR1 are rotatably supported at the lower end of the front fork 13. Further, a wheel cylinder WC1 and a front wheel velocity sensor 44 are fixed to a portion in the vicinity of the lower end of the front fork 13. The brake rotor BR1 includes one or plurality of discs (not shown). The wheel cylinder WC1 is incorporated in a brake caliper together with a brake pad (not shown) pressed against the disc of the brake rotor BR1 at a time of braking of the front wheel 14. The front wheel velocity sensor 44 detects a rotation velocity of the front wheel 14 and supplies a result of detection to a lateral sliding acceleration detection device 50, an ECU for ABS (Electronic Control Unit for Antilock Brake System) 60, and an ECU (Electronic Control Unit) 70, described below. A handle 15 is provided at the upper end of the head pipe 12.

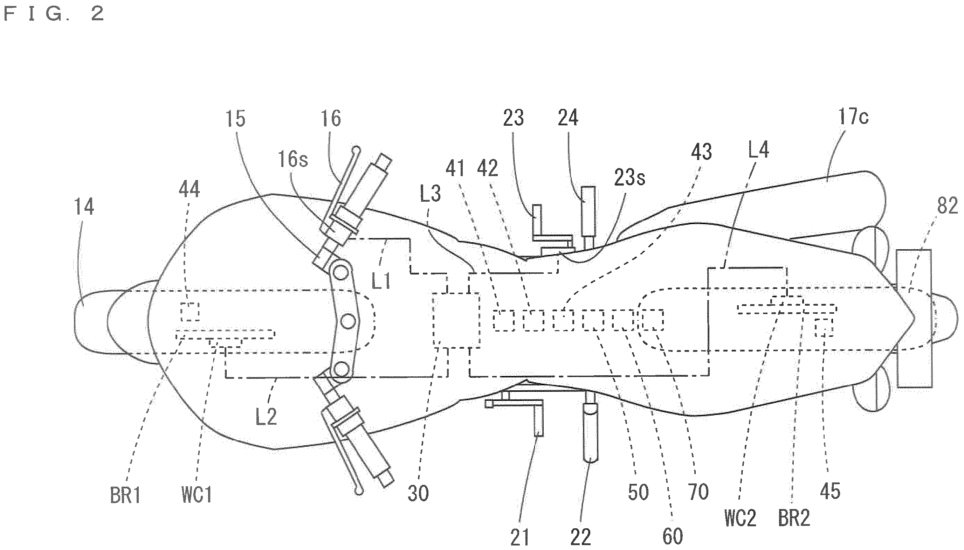

Fig. 2 is a schematic plan view of the motorcycle 100 of Fig. 1 as viewed from above. In Fig. 2, constituent elements of part of the motorcycle 100 are shown together with an outer shape of the motorcycle 100 of Fig. 1. As shown in Fig. 2, a brake lever 16 and a front wheel master cylinder 16s are provided at a right side portion of the handle 15.

As shown in Fig. 1, an engine 17 is provided at a central portion of the main body frame 11. One end of an intake pipe 17a is attached to an intake port of the engine 17. One end of an exhaust pipe 17b is attached to an exhaust port of the engine 17. A muffler 17c is attached to the other end of the exhaust pipe 17b.

A crank case 18 is attached to a lower portion of the engine 17. A mission case 19 is coupled to a rear portion of the crank case 18. The mission case 19 is positioned at a lower portion of the main body frame 11.

As shown in Figs. 1 and 2, a shift pedal 21 is provided at a left side portion of the mission case 19. A back step 22 is provided behind the shift pedal 21. The back step 22 is supported by the main body frame 11. As shown in Fig. 2, a brake pedal 23 and a rear wheel master cylinder 23s are provided at a right side portion of the mission case 19. A back step 24 is provided behind the brake pedal 23. The back step 24 is supported by the main body frame 11 of Fig. 1.

As shown in Fig. 1, a rear arm 81 is connected to the main body frame 11 to extend rearward of the mission case 19. A rear wheel 82, a rear wheel driven sprocket 83 and a brake rotor BR2 are rotatably supported at the rear end of the rear arm 81. A chain 84 is attached to the rear wheel driven sprocket 83. A wheel cylinder WC2 and a rear wheel velocity sensor 45 are fixed to a portion in the vicinity of the rear end of the rear arm 81. The brake rotor BR2 includes one or plurality of discs (not shown). A wheel cylinder WC2 is incorporated in a brake caliper together with a brake pad (not shown) pressed against the disc of the brake rotor BR2 at a time of braking of the rear wheel 82. The rear wheel velocity sensor 45 detects a rotation velocity of the rear wheel 82, and supplies a result of detection to a lateral sliding acceleration detection device 50, the ECU 60 for ABS and the ECU 70, described below.

A fuel tank 25 is provided at an upper portion of the engine 17, and two seats 26, 27 are provided behind the fuel tank 25 to be arranged in a front-and-rear direction. A fluid pressure control unit 30, a gyroscope 41, a lateral acceleration sensor 42, a longitudinal acceleration sensor 43, the lateral sliding acceleration detection device 50, the ECU 60 for ABS and the ECU 70 are provided at lower portions of the fuel tank 25 and the two seats 26, 27.

As shown in Fig. 2, the fluid pressure control unit 30 is connected to the front wheel master cylinder 16s, the rear wheel master cylinder 23s and the wheel cylinders WC1, WC2. Details of the fluid pressure control unit 30 will be described below.

The gyroscope 41 detects a yaw rate and a roll rate of the motorcycle 100 and supplies results of detection to the lateral sliding acceleration detection device 50, the ECU 60 for ABS and the ECU 70.

The lateral acceleration sensor 42 detects lateral acceleration generated in the left-and-right direction of the motorcycle 100 and supplies a result of detection to the lateral sliding acceleration detection device 50, the ECU 60 for ABS and the ECU 70.

The longitudinal acceleration sensor 43 detects longitudinal acceleration generated in the front-and-rear direction of the motorcycle 100 and supplies a result of detection to the lateral sliding acceleration detection device 50, the ECU 60 for ABS and the ECU 70.

The lateral sliding acceleration detection device 50 is constituted by a CPU (Central Processing Unit) and a memory, or a microcomputer. The lateral sliding acceleration detection device 50 detects lateral sliding acceleration as one example of a degree of lateral sliding that occurs in the left-and-right direction of the motorcycle 100 based on the results of detection from the gyroscope 41, the lateral acceleration sensor 42, the longitudinal acceleration sensor 43, the front wheel velocity sensor 44 and the rear wheel velocity sensor 45. Further, the lateral sliding acceleration detection device 50 supplies a result of detection to the ECU 60 for ABS. Details of the lateral sliding acceleration detection device 50 and the definition of the lateral sliding acceleration will be described below.

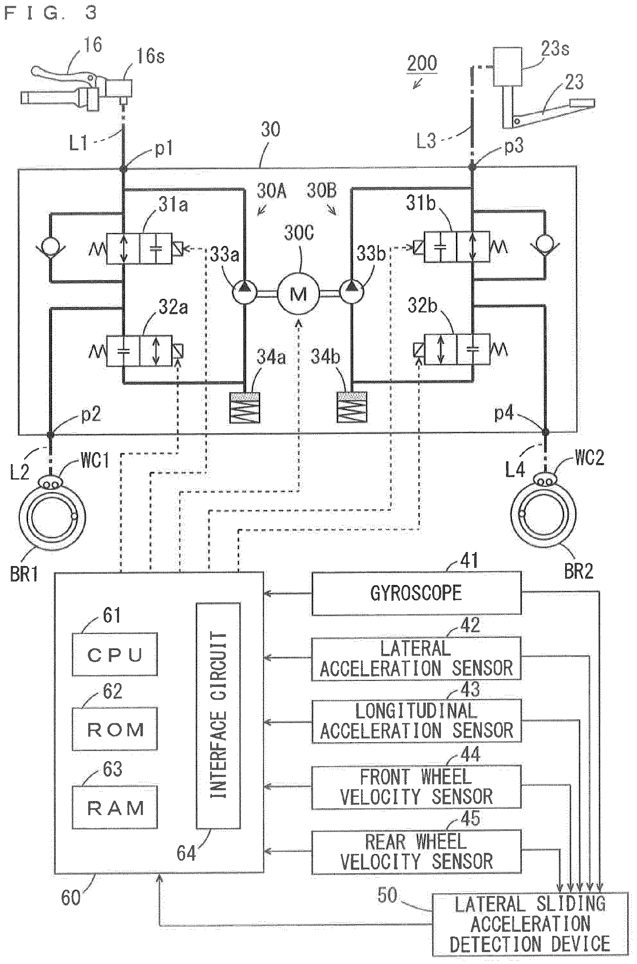

The ECU 60 for ABS includes a CPU (Central Processing Unit) 61, a ROM (Read Only Memory) 62, a RAM (Random Access Memory) 63 and an interface circuit 64 as shown in Fig. 3, described below. The CPU 61 controls the fluid pressure control unit 30 based on the results of detection supplied from the gyroscope 41, the lateral acceleration sensor 42, the longitudinal acceleration sensor 43, the front wheel velocity sensor 44, the rear wheel velocity sensor 45 and the lateral sliding acceleration detection device 50 as described below. The ROM 62 stores an ABS control program, a target slip ratio table and the like, describe below. The RAM 63 stores an ABS flag and various data, described below, and functions as a processing area of the CPU 61.

The ECU 70 includes the CPU, the ROM, the RAM and the interface circuit that are not shown. Results of detection are supplied to the CPU of the ECU 70 from various sensors. The CPU of the ECU 70 controls operations of the engine 17, a transmission (not shown) and the like based on these results of detection. The ROM of the ECU 70 stores a control program of the CPU of the ECU 70 and the like. The RAM of the ECU 70 stores various data and functions as a processing area of the CPU of the ECU 70.

In the present embodiment, the brake control device is constituted by the brake lever 16, the front wheel master cylinder 16s, the brake pedal 23, the rear wheel master cylinder 23s, the fluid pressure control unit 30, the gyroscope 41, the lateral acceleration sensor 42, the longitudinal acceleration sensor 43, the rear wheel velocity sensor 45, the lateral sliding acceleration detection device 50, the ECU 60 for ABS, the wheel cylinders WC1, WC2, the brake rotors BR1, BR2, described above, and brake hoses L1 to L4.

(2) Brake Control Device

Fig. 3 is a block diagram showing a configuration of the brake control device included in the motorcycle 100 of Fig. 1. The fluid pressure control unit 30 of Fig. 3 includes a front wheel fluid pressure circuit 30A, a rear wheel fluid pressure circuit 30B, a motor 30C and first to fourth ports p1 to p4.

The brake hose L1 connects the first port p1 of the fluid pressure control unit 30 and the front wheel master cylinder 16s, and the brake hose L2 connects the second port p2 and the wheel cylinder WC1 of the front wheel 14. The brake hose L3 connects the third port p3 of the fluid pressure control unit 30 and the rear wheel master cylinder 23s, and the brake hose L4 connects the fourth port p4 and the wheel cylinder WC2 of the rear wheel 82.

The front wheel fluid pressure circuit 30A mainly includes a holding valve 31a, a pressure reducing valve 32a, a pump 33a and a reservoir 34a and is provided between the first port p1 and the second port p2. Thus, the front wheel fluid pressure circuit 30A connects the front wheel master cylinder 16s and the wheel cylinder WC1 of the front wheel 14 via the brake hoses L1, L2.

In the front wheel fluid pressure circuit 30A, the holding valve 31a is provided between the first port p1 and the second port p2, and the pressure reducing valve 32a is provided between the second port p2 and the reservoir 34a. Each of the holding valve 31a and the pressure reducing valve 32a is a two-position switching-type electromagnetic valve having two ports. Further, the pump 33a is provided between the first port p1 and the reservoir 34a. An inlet port of the pump 33a is connected to the reservoir 34a, and a discharge port of the pump 33a is connected to the first port p1.

A brake fluid is filled in the front wheel master cylinder 16s, the front wheel fluid pressure circuit 30A and the brake hoses L1, L2.

Similarly to the front wheel fluid pressure circuit 30A, the rear wheel fluid pressure circuit 30B mainly includes a holding valve 31b, a pressure reducing valve 32b, a pump 33b and a reservoir 34b and is provided between the third port p3 and the fourth port p4. Thus, the rear wheel fluid pressure circuit 30B connects the rear master cylinder 23s to the wheel cylinder WC2 of the rear wheel 82 via the brake hoses L3, L4.

In the rear wheel fluid pressure circuit 30B, the holding valve 31b is provided between the third port p3 and the fourth port p4, and the pressure reducing valve 32b is provided between the fourth valve p4 and the reservoir 34b. Each of the holding valve 31b and the pressure reducing valve 32b is a two-position switching-type electromagnetic valve having two ports. Further, the pump 33b is provided between the third port p3 and the reservoir 34b. An inlet port of the pump 33b is connected to the reservoir 34b, and a discharge port of the pump 30b is connected to the third port p3.

The brake fluid is filled in the rear wheel master cylinder 23s, the rear wheel fluid pressure circuit 30B and the brake hoses L3, L4.

The motor 30C is used to respectively drive the pump 33a of the front wheel fluid pressure circuit 30A and the pump 33b of the rear wheel fluid pressure circuit 30B.

As described above, results of detection of the gyroscope 41, the lateral acceleration sensor 42, the longitudinal acceleration sensor 43, the front wheel velocity sensor 44, the rear wheel velocity sensor 45 and the lateral sliding acceleration detection device 50 are supplied to the ECU 60 for ABS. The CPU 61 of the ECU 60 for ABS controls the operations of the front wheel fluid pressure circuit 30A, the rear wheel fluid pressure circuit 30B and the motor 30C based on the supplied results of detection. Thus, when the ABS flag, described below, is in an ON state, a pressure of the brake fluid supplied to each of the wheel cylinders WC1, WC2 (hereinafter referred to as a WC fluid pressure) is adjusted.

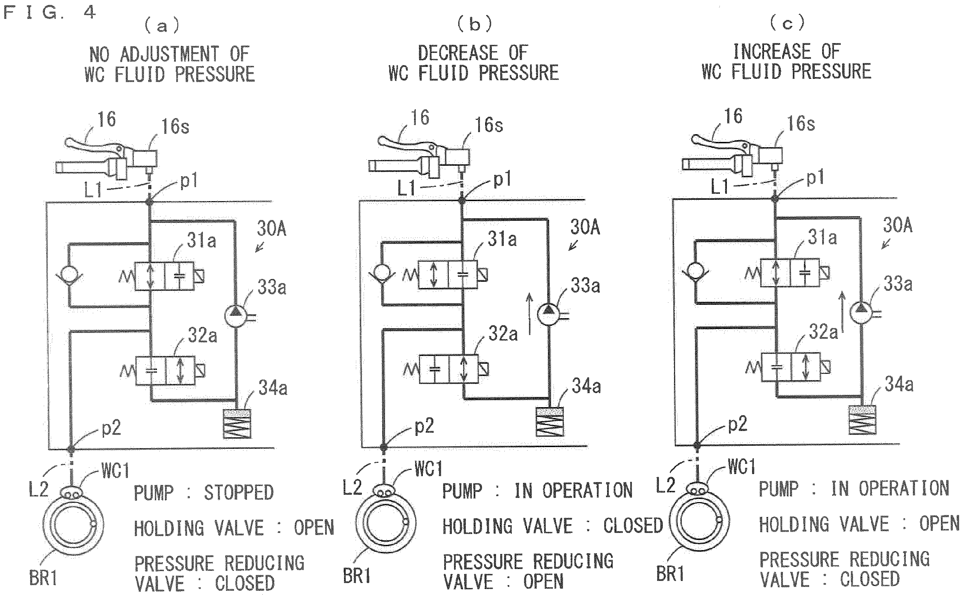

Fig. 4 is a schematic diagram for explaining an adjustment operation of the WC fluid pressure in the front wheel fluid pressure circuit 30A of Fig. 3. In the following description, it is assumed that a constant fluid pressure is supplied to the front wheel master cylinder 16s by an operation of the brake lever 16.

A state of the front wheel fluid pressure circuit 30A of when the adjustment of the WC fluid pressure is not performed is shown in Fig. 4(a). In this case, the CPU 61 of Fig. 3 opens the holding valve 31a, closes the pressure reducing valve 32a and stops the pump 33a. Thus, the front wheel master cylinder 16s and the wheel cylinder WC1 communicate with each other via the holding valve 31a. Therefore, the fluid pressure supplied to the front wheel master cylinder 16s by the operation of the brake lever 16 is transmitted to the wheel cylinder WC1.

A state of the front wheel fluid pressure circuit 30A of when the WC fluid pressure is adjusted to decrease is shown in Fig. 4(b). In this case, the CPU 61 of Fig. 3 closes the holding valve 31a, opens the pressure reducing valve 32a and activates the pump 33a. Thus, the front wheel master cylinder 16s and the reservoir 34a communicate with each other. At this time, the pump 33a draws up the brake fluid in the reservoir 34a towards the first port p1. Therefore, the brake fluid in the wheel cylinder WC1 flows in the reservoir 34a. As a result, the WC fluid pressure decreases regardless of the operation of the brake lever 16.

A state of the front wheel fluid pressure circuit 30A of when the WC fluid pressure is adjusted to increase is shown in Fig. 4(c). In this case, the CPU 61 of Fig. 3 opens the holding valve 31a, closes the pressure reducing valve 32a and activates the pump 33a. Thus, the front wheel master cylinder 16s and the reservoir 34a communicate with each other. At this time, the pump 33a draws up the brake fluid in the reservoir 34a towards the first port p1. Therefore, the fluid pressure supplied to the front wheel master cylinder 16s is transmitted to the wheel cylinder WC1 by the operation of the brake lever 16, and the brake fluid in the reservoir 34a flows towards the wheel cylinder WC1. As a result, the WC fluid pressure increases as compared to a case in which the adjustment of the WC fluid pressure is not performed.

An adjustment operation of the WC fluid pressure in the rear wheel fluid pressure circuit 30B of Fig. 3 is similarly performed to the adjustment operation of the WC fluid pressure in the front wheel fluid pressure circuit 30A.

(3) Lateral Sliding Acceleration Detection Device

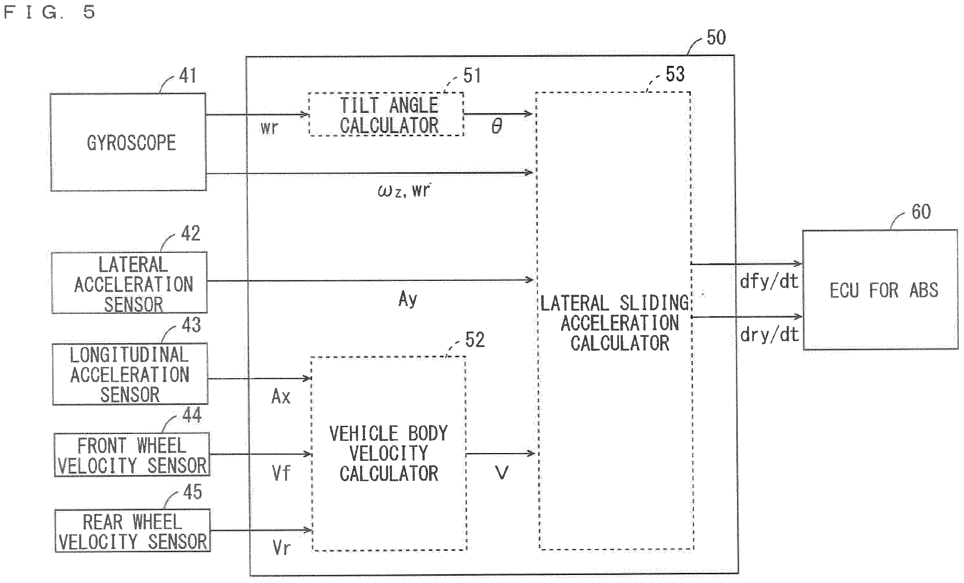

Fig. 5 is a block diagram for explaining a configuration and an operation of the lateral sliding acceleration detection device 50 of Fig. 3. As shown in Fig. 5, the lateral sliding acceleration detection device 50 includes a tilt angle calculator 51, a vehicle body velocity calculator 52 and a lateral sliding acceleration calculator 53. The tilt angle calculator 51, the vehicle body velocity calculator 52 and the lateral sliding acceleration calculator 53 of Fig. 5 are respectively configured by application programs. Part or all of these constituent elements may be configured by electronic circuits such as logic circuits.

In the lateral sliding acceleration detection device 50, the roll rate wr detected by the gyroscope 41 is supplied to the tilt angle calculator 51. The tilt angle calculator 51 calculates a roll angle (a bank angle) acquired by integrating the supplied roll rate wr over time as a tilt angle $\theta$ of the motorcycle 100 and supplies a result of calculation to the lateral sliding acceleration calculator 53. In the present embodiment, the tilt angle $\theta$ indicates a tilt in a lateral direction of the motorcycle 100 with respect to a vertical plane parallel to the front-and-rear direction of the motorcycle 100.

Further, in the lateral sliding acceleration detection device 50, the longitudinal acceleration Ax detected by the longitudinal acceleration sensor 43 is supplied to the vehicle body velocity calculator 52. Further, the rotation velocity Vf of the front wheel 14 detected by the front wheel velocity sensor 44 and the rotation velocity Vr of the rear wheel 82 detected by the rear wheel velocity sensor 45 are supplied to the vehicle body velocity calculator 52.

The vehicle body velocity calculator 52 calculates the front wheel peripheral velocity by multiplying the rotation velocity Vf of the front wheel 14 by a circumferential length of the front wheel 14 (a length of an outer periphery of a tire). Further, the vehicle body velocity calculator 52 calculates a rear wheel peripheral velocity by multiplying the rotation velocity Vr of the rear wheel 82 by a circumferential length of the rear wheel 82.

A brake sensor (not shown) is provided in the motorcycle 100 according to the present embodiment. The brake sensor detects amounts of operation of the brake lever 16 and the brake pedal 23 by a rider and supplies the detected amounts of operation to the CPU 61 of Fig. 3 and the vehicle body velocity calculator 52. In this case, the vehicle body velocity calculator 52 determines whether the brake lever 16 and the brake pedal 23 are respectively operated based on the supplied amounts of operation.

The vehicle body velocity calculator 52 estimates the vehicle body velocity V of the motorcycle 100 based on the longitudinal acceleration Ax, the front wheel peripheral velocity, the rear wheel peripheral velocity, a state of operation of the brake lever 16 and a state of operation of the brake pedal 23.

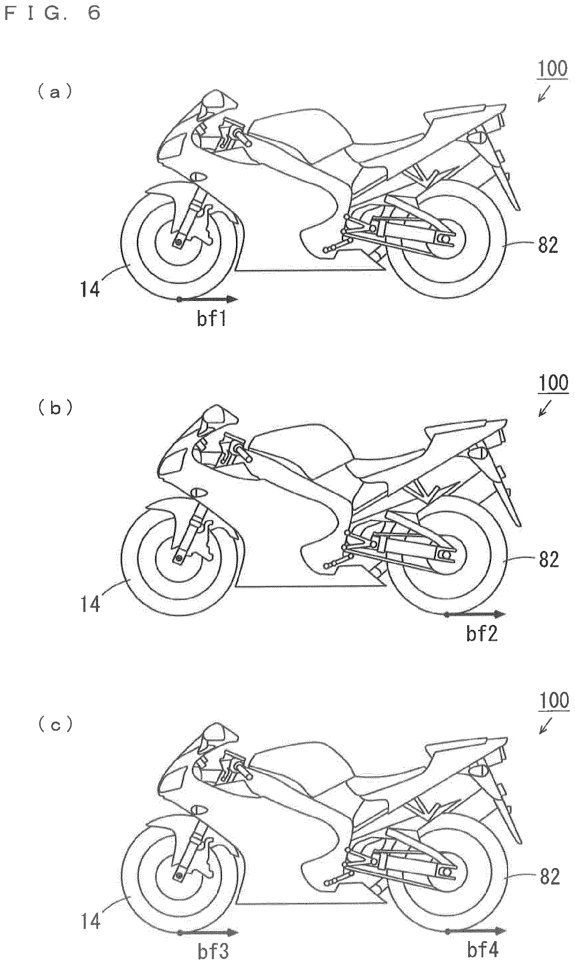

Fig. 6 is a diagram for explaining a method of estimation of the vehicle body velocity V of the motorcycle 100. A brake state of the motorcycle 100 caused by the operation of only the brake lever 16 by the rider is shown in Fig. 6(a). In this case, as indicated by a thick solid arrow bf1 in Fig. 6(a), brake force is generated between the front wheel 14 and a road surface. On the one hand, the brake force is not generated between the rear wheel 62 and the road surface. Therefore, it is considered that the vehicle body velocity V is substantially equal to the rear wheel peripheral velocity. Therefore, the vehicle body velocity calculator 52 supplies the calculated rear wheel peripheral velocity to the lateral sliding acceleration calculator 53 as the vehicle body velocity V.

A brake state of the motorcycle 100 caused by the operation of only the brake pedal 23 by the rider is shown in Fig. 6(b). In this case, as indicated by a thick solid arrow bf2 in Fig. 6(b), the brake force is generated between the rear wheel 82 and the road surface. On the one hand, the brake force is not generated between the front wheel 14 and the road surface. Therefore, it is considered that the vehicle body velocity V is substantially equal to the front wheel peripheral velocity. Therefore, the vehicle body velocity calculator 52 supplies the calculated front wheel peripheral velocity to the lateral sliding acceleration calculator 53 as the vehicle body velocity V.

A brake state of the motorcycle 100 caused by the operations of the brake lever 16 and the brake pedal 23 by the rider is shown in Fig. 6(c). In this case, as indicated by a thick solid arrow bf3 in Fig. 6(c), the brake force is generated between the front wheel 14 and the road surface. Further, as indicated by a thick solid arrow bf4, the brake force is generated between the rear wheel 82 and the road surface. In this case, it is considered that the vehicle body velocity V is larger than the front wheel peripheral velocity and larger than the rear wheel peripheral velocity. Therefore, the vehicle body velocity calculator 52 integrates the longitudinal acceleration Ax supplied from the longitudinal acceleration sensor 43 over time from each of the operation starting time points of brake lever 16 and the brake pedal 23 and supplies each integration value to the lateral sliding acceleration calculator 53 as the vehicle body velocity V.

As shown in Fig. 5, the yaw rate $\omega_z$ and the roll rate wr detected by the gyroscope 41 are supplied to the lateral sliding acceleration calculator 53 of the lateral sliding acceleration detection device 50 in addition to the above-mentioned tilt angle θ and the vehicle body velocity V. Further, the lateral acceleration Ay detected by the lateral acceleration sensor 42 is supplied.

In the lateral sliding acceleration detection device 50, a horizontal distance If (Fig. 1) between an attachment position of the lateral acceleration sensor 42 and the center of the front wheel 14 and a horizontal distance Ir (Fig. 1) between the attachment position of the lateral acceleration sensor 42 and the center of the rear wheel 82 are stored in advance.

The lateral sliding acceleration calculator 53 calculates the lateral sliding acceleration of the front wheel 14 and the rear wheel 82 based on the supplied tilt angle θ, vehicle body velocity V, yaw rate $\omega_z$, roll rate wr and lateral acceleration Ay, and the above-mentioned horizontal distances If, Ir, and supplies a result of calculation to the ECU 60 for ABS.

The lateral sliding acceleration dfy/dt of the front wheel 14 can be calculated by a following formula (1), for example, when gravity acceleration is represented by 'g'.

$$dfy/dt = -V \cdot \omega_z \cdot \sec\theta - g \cdot \tan\theta + Ay \cdot \sec\theta + If \cdot d\omega_z/dt \cdot \sec\theta + If \cdot wr \cdot \omega_z \cdot \tan\theta \cdot \sec\theta \cdots (1)$$

Further, the lateral sliding acceleration dry/dt of the rear wheel 82 can be calculated by a following formula (2), for example, when the gravity acceleration is represented by 'g'.

$$dry/dt = -V \cdot \omega_z \cdot \sec\theta - g \cdot \tan\theta + Ay \cdot \sec\theta - Ir \cdot d\omega_z/dt \cdot \sec\theta - Ir \cdot wr \cdot \omega_z \cdot \tan\theta \cdot \sec\theta \cdots (2)$$

The lateral sliding acceleration of the front wheel 14 and the rear wheel 82 may be estimated using another known method.

(4) Basic Idea of First Embodiment

The CPU 61 of Fig. 3 calculates the front wheel peripheral velocity, the rear wheel peripheral velocity and the vehicle body velocity V based on the results of detection supplied from the longitudinal acceleration sensor 43, the front wheel velocity sensor 44 and the rear wheel velocity sensor 45 similarly to the vehicle body velocity calculator 52 of Fig. 5.

The CPU 61 calculates a slip ratio SLf as one example of a current degree of the longitudinal sliding of the front wheel 14 by a following formula (3) when the front wheel peripheral velocity is represented by Vwf and calculates a slip ratio SLr as one example of a current degree of the longitudinal sliding of the rear wheel 82 by a following formula (4) when the rear wheel peripheral velocity is represented by Vwr.

$$SLf = \{(V - Vwf)/V\} \cdot 100 \cdots (3)$$

$$SLr = \{(V - Vwr)/V\} \cdot 100 \cdots (4)$$

Further, the CPU 61 controls the front wheel fluid pressure circuit 30A of the fluid pressure control unit 30 such that the slip ratio of the front wheel 14 becomes close to a target slip ratio, and controls the rear wheel fluid pressure circuit 30B of the fluid pressure control unit 30 such that the slip ratio of the rear wheel 82 becomes close to the target slip ratio. In this manner, an antilock brake operation of the front wheel 14 is performed, and an antilock brake operation of the rear wheel 82 is performed, by the CPU 61.

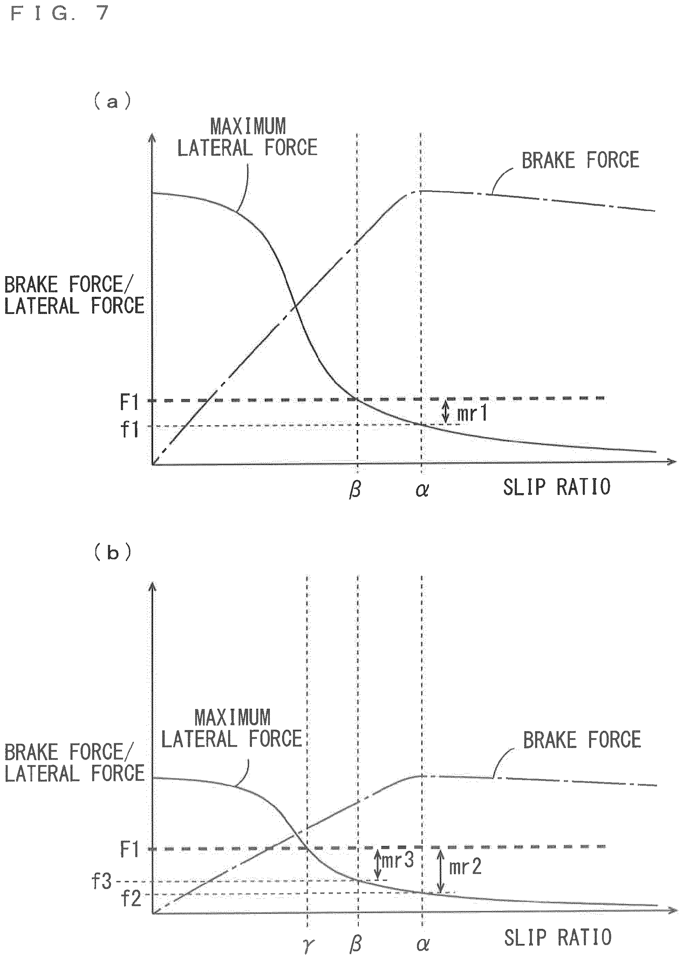

Fig. 7 is a graph for explaining the basic idea of the first embodiment. A relationship between the slip ratio on a road surface having high friction coefficient (a dry asphalt road surface, for example) and each of the brake force and maximum lateral force is shown in Fig. 7(a). The maximum lateral force refers to a maximum value of the lateral force that can be generated between the wheel (the front wheel 14 or the rear wheel 82) and the road surface. A relationship between the slip ratio on a road surface having low friction coefficient (a wet asphalt road surface, for example) and each of the brake force and the maximum lateral force is shown in Fig. 7(b). In the graphs of Figs. 7(a), 7(b), the ordinate indicates the brake force or the lateral force, and the abscissa indicates the slip ratio. Further, the brake force generated between the wheel (the front wheel 14 or the rear wheel 82) and the road surface is indicated by a one-dot dash line. Further, the maximum lateral force is indicated by a solid line.

As shown in Figs. 7(a), 7(b), the larger the slip ratio is, the larger the brake force is, and the larger the slip ratio is, the smaller the maximum lateral force is. Further, the brake force on the road surface having the low friction coefficient is smaller than the brake force on the road surface having the high friction coefficient. The maximum lateral force on the road surface having the low friction coefficient is smaller than the maximum lateral force on the road surface having the high friction coefficient.

In the following description, a subtraction value acquired when "the maximum lateral force that can be generated between the wheel and the road surface at the current slip ratio" is subtracted from "lateral force required in order to prevent the lateral sliding of the wheel" is referred to as a margin of the lateral force.

As shown in Fig. 7(a), during the turning on the road surface having the high friction coefficient, when the current slip ratio is a value $\alpha$, the maximum lateral force is f1. At this time, when the lateral force F1 in order to prevent the lateral sliding of the wheel is larger than the maximum lateral force f1, a margin mr1 of the lateral force is a negative value. In this case, the lateral force generated between the wheel and the road surface is insufficient, so that the lateral sliding of the wheel occurs. Therefore, it is necessary to increase the margin of the lateral force to a value not less than 0 in order to inhibit the lateral sliding of the wheel. Therefore, the target slip ratio is set smaller than the current slip ratio.

When the target slip ratio is excessively small, the brake force generated between the wheel and the road surface decreases. Therefore, in order to inhibit an excessive decrease of the brake force, the target slip ratio is preferably set to a value $\beta$, which causes the margin of the lateral force to be substantially 0.

On the one hand, as shown in Fig. 7(b), during the turning on the road surface having the low friction coefficient, when the current slip ratio is the value $\alpha$, the maximum lateral force is f2 smaller than the above-mentioned f1. At this time, because the lateral force F1 required in order to prevent the lateral sliding of the wheel is larger than the maximum lateral force f2, a margin mr2 of the lateral force is a negative value.

As described above, the maximum lateral force on the road surface having the low friction coefficient is smaller than the maximum lateral force on the road surface having the high friction coefficient. Therefore, even if the slip ratio decreases from the value $\alpha$ to the value $\beta$, the maximum lateral force is f3 smaller than the lateral force F1 required in order to prevent the lateral sliding of the wheel. Thus, a margin mr3 of the lateral force is a negative value. Therefore, in order to inhibit the lateral sliding of the front wheel 14 on the road surface having the low friction coefficient, the target slip ratio is preferably set to a value $\gamma$, which causes the margin of the lateral force to be substantially 0.

On the one hand, because the lateral sliding hardly occurs during the travelling of the motorcycle 100 in a straight line, the target slip ratio of the wheel is changed such that large brake force is acquired. Thus, an amount of decrease of the brake force for the wheel due to the change of the target slip ratio decreases. Therefore, sufficient deceleration is performed at a time of braking during the travelling of the vehicle in the straight line.

In this manner, the margin of the lateral force and the brake force change according to a tilt state of the motorcycle 100 and a state of the road surface. Further, the margin of the lateral force and the brake force also change depending on a state of the wheel.

Therefore, in the present embodiment, as described below, the target slip ratio of the front wheel 14 is changed based on the magnitude of the lateral sliding acceleration dfy/dt of the front wheel 14 detected by the lateral sliding acceleration detection device 50 such that the margin of the lateral force increases. The target slip ratio of the front wheel 14 is changed based on the magnitude of the lateral sliding acceleration dfy/dt of the front wheel 14 detected by the lateral sliding acceleration detection device 50 such that an excessive decrease of the brake force is inhibited. In this manner, the antilock brake operation of the front wheel 14 is corrected.

Thus, when the brake operation of the front wheel 14 is performed during turning of the motorcycle 100, the lateral sliding of the front wheel 14 is inhibited regardless of a tilt state of the motorcycle 100 and states of the road surface and the front wheel 14. Further, as during the travelling of the motorcycle 100 in the straight line, when the lateral sliding acceleration dfy/dt of the front wheel 14 is small, high brake force can be acquired.

Similarly, in the present embodiment, as described below, the target slip ratio of the rear wheel 82 is changed based on the magnitude of the lateral sliding acceleration dry/dt of the rear wheel 82 detected by the lateral sliding acceleration detection device 50 such that the margin of the lateral force increases. The target slip ratio of the rear wheel 82 is changed based on the magnitude of the lateral sliding acceleration dry/dt of the rear wheel 82 detected by the lateral sliding acceleration detection device 50 such that an excessive decrease of the brake force is inhibited. In this manner, the antilock brake operation of the rear wheel 82 is corrected.

Thus, when the brake operation of the rear wheel 82 is performed during the turning of the motorcycle 100, the lateral sliding of the rear wheel 82 is inhibited regardless of the tilt state of the motorcycle 100 and the states of the road surface and the rear wheel 82. Further, as during the travelling of the motorcycle 100 in the straight line, when the lateral sliding acceleration dry/dt of the rear wheel 82 is small, high brake force can be acquired.

(5) ABS Control Program

In the brake control device according to the present embodiment, the ABS control programs for the front wheel 14 and the rear wheel 82 are respectively and independently performed by the CPU 61 of Fig. 3. Thus, an ABS control process based on each ABS control program is performed. Each ABS control process includes a correction process that changes the target slip ratio.

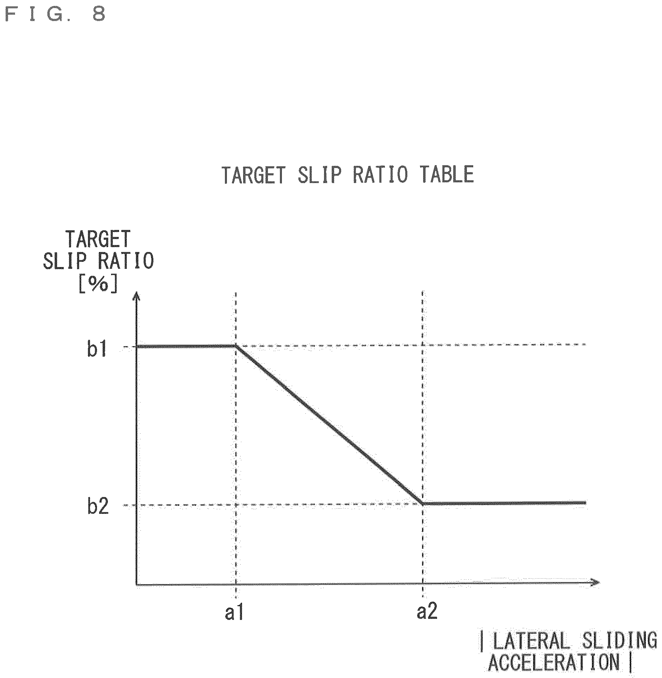

The target slip ratio table is used for the correction process in the ABS control process. Fig. 8 is a graph showing one example of the target slip ratio table. In the graph of Fig. 8, the ordinate indicates the target slip ratio of the wheel, and the abscissa indicates an absolute value of the lateral sliding acceleration of the wheel. In the target slip ratio table, as indicated by a thick solid line, a relationship between the absolute value of the lateral sliding acceleration of the wheel and the target slip ratio of the wheel is set in advance. As described above, the target slip ratio table is stored in the ROM 62 of Fig. 3.

According to the target slip ratio table of Fig. 8, in a range in which the absolute value of the lateral sliding acceleration is between a value a1 and a value a2, the target slip ratio is set to decrease from a value b1 to a value b2 as the absolute value of the lateral sliding acceleration increases. The value a2 is larger than the value a1. Further, the value b2 is smaller than the value b1. In a range in which the absolute value of the lateral sliding acceleration is not more than the value a1, the target slip ratio is set to the constant value b1. In a range in which the absolute value of the lateral sliding acceleration is not less than the value a2, the target slip ratio is set to the constant value b2. The value b1 of the target slip ratio is 15 %, for example, and the value b2 of the target slip ratio is 5 %, for example.

The target slip ratio is set in this manner, so that the larger the absolute value of the lateral sliding acceleration is, the lower the target slip ratio is, when the absolute value of the lateral sliding acceleration of the wheel is in the range between the value a1 and the value a2. Thus, the lateral sliding of the wheel can be appropriately inhibited while the brake force for the wheel is ensured.

Further, when the absolute value of the lateral sliding acceleration is not less than the value a2, the target slip ratio is kept at the minimum value b2. Thus, when the absolute value of the lateral sliding acceleration of the wheel is large, the lateral sliding of the wheel can be inhibited while the brake force for the wheel is prevented from being too small.

Further, when the absolute value of the lateral sliding acceleration is not more than the value a1, the target slip ratio is kept at the maximum value b1. Thus, when the absolute value of the lateral sliding acceleration of the wheel is small, the brake force for the wheel can be ensured while the lateral sliding of the wheel is inhibited.

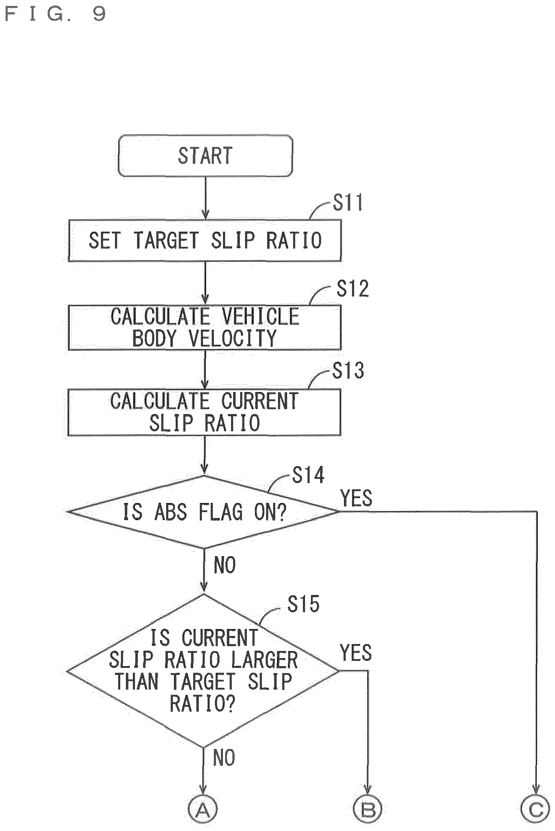

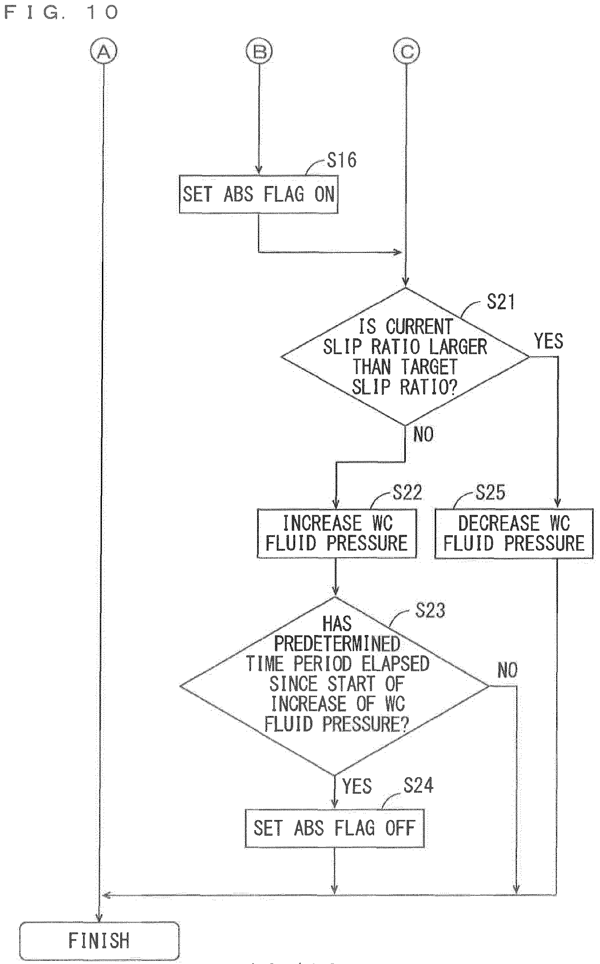

Figs. 9 and 10 are flow charts of the ABS control process based on the ABS control program according to the first embodiment. The ABS control process of Figs. 9 and 10 is repeatedly performed in a period of not less than 1 msec and not more than 20 msec, for example.

First, the CPU 61 acquires the target slip ratio corresponding to the absolute value of the lateral sliding acceleration of the wheel supplied from the lateral sliding acceleration calculator 53 of Fig. 5 from the target slip ratio table stored in the ROM 62 of Fig. 3, thereby setting the target slip ratio of the wheel (step S11). In this case, it is not necessary to perform a calculation process for calculating the target slip ratio. Thus, the target slip ratio is easily set in a short period of time.

Subsequently, similarly to the vehicle body velocity calculator 52 of Fig. 5, the CPU 61 calculates the vehicle body velocity V based on the results of detection supplied from the longitudinal acceleration sensor 43, the front wheel velocity sensor 44 and the rear wheel velocity sensor 45, and amounts of operation of the brake lever 16 and the brake pedal 23 (step S12).

Further, the CPU 61 calculates the current slip ratio of the wheel (step S13). Specifically, the CPU 61 calculates the front wheel peripheral velocity Vwf based on the result of detection supplied from the front wheel velocity sensor 44, for example. Thereafter, the CPU 61 calculates the current slip ratio SLf of the front wheel 14 by the above-mentioned formula (3) based on the vehicle body velocity V and the front wheel peripheral velocity Vwf. Alternatively, the CPU 61 calculates the rear wheel peripheral velocity Vwr based on the result of detection supplied from the rear wheel velocity sensor 45, for example. Thereafter, the CPU 61 calculates the current slip ratio SLr of the rear wheel 82 by the above-mentioned formula (4) based on the vehicle body velocity V and the rear wheel peripheral velocity Vwr.

Thereafter, the CPU 61 determines whether the ABS flag stored in the RAM 63 of Fig. 3 is in the ON state (step S14). The ABS flag of the present example is used to determine whether the fluid pressure of the wheel cylinder provided to correspond to the wheel is being adjusted (the fluid pressure is increasing or decreasing in the present example) by the fluid pressure control unit 30 of Fig. 3. The ON state of the ABS flag corresponds to a state in which the fluid pressure of the wheel cylinder is being adjusted (the fluid pressure is increasing or decreasing in the present example) by the fluid pressure control unit 30. That is, the ON state of the ABS flag indicates that the ABS is activated (the antilock brake operation is being performed). An OFF state of the ABS flag corresponds to a state in which the fluid pressure of the wheel cylinder is not being adjusted by the fluid pressure control unit 30. That is, the OFF state of the ABS flag indicates that the ABS is not activated (the antilock brake operation is being stopped.) In an initial state, the ABS flag is in the OFF state.

When the ABS flag is in the OFF state, the CPU 61 determines whether the current slip ratio of the wheel calculated in the latest step S13 is larger than the target slip ratio set in the latest step S11 (step S15).

In the step S15, when the current slip ratio is not more than the target slip ratio, the margin of the lateral force is a positive value. Thus, sufficient lateral force is generated between the wheel and the road surface, so that the lateral sliding of the wheel does not occur. In this case, the CPU 61 maintains the state in which the ABS is not activated and returns to the process of the step S11.

In the above-mentioned step S15, when the current slip ratio is larger than the target slip ratio, the margin of the lateral force is a negative value. Thus, the lateral force generated between the wheel and the road surface is insufficient, so that the lateral sliding of the wheel occurs. Therefore, it is necessary to increase the margin of the lateral force to a value not less than 0 in order to inhibit the lateral sliding of the wheel. Therefore, the CPU 61 sets the ABS flag in the ON state (step S16). Thus, the ABS is activated.

When the ABS flag is in the ON state in the step S14, and when the ABS flag is set in the ON state in the step S16, the CPU 61 determines whether the current slip ratio of the wheel calculated in the latest step S13 is larger than the target slip ratio set in the latest step S11 (step S21).

As described above, when the current slip ratio is not more than the target slip ratio, the margin of the lateral force is a positive value. Thus, sufficient lateral force is generated between the wheel and the road surface, so that the lateral sliding of the wheel does not occur. Therefore, the CPU 61 increases the WC fluid pressure of the wheel by controlling the fluid pressure control unit 30 (step S22). Thus, large brake force can be generated between the wheel and the road surface.

In the step S22, when the state in which the WC fluid pressure is not increased is changed to the state in which the WC fluid pressure is increased, the CPU 61 starts a built-in timer.

Next, the CPU 61 determines whether a predetermined time period has elapsed since the start of the increase of the WC fluid pressure (step S23).

When the predetermined time period has elapsed since the start of the increase of the WC fluid pressure, the CPU 61 sets the ABS flag in the OFF state (step S24) and returns to the process of the step S11. Thus, the ABS is stopped. At this time, the CPU 61 resets the built-in timer. On the one hand, when the predetermined time period has not elapsed since the start of the increase of the WC fluid pressure, the CPU 61 returns to the process of the step S11.

In the step S21, when the current slip ratio is larger than the target slip ratio, the lateral sliding of the wheel occurs as described above in the process of the step S15. Therefore, the CPU 61 decreases the WC fluid pressure of the wheel by controlling the fluid pressure control unit 30 (step S25). Thus, the lateral sliding of the wheel can be inhibited. Thereafter, the CPU 61 returns to the process of the step S11.

In this manner, the fluid pressure control unit 30 is controlled by the ABS control process such that the slip ratio of the wheel becomes close to the target slip ratio set in the step S11. When the predetermined time period has elapsed since the slip ratio of the wheel is not more than the target slip ratio, the ABS is stopped.

(6) Control Example

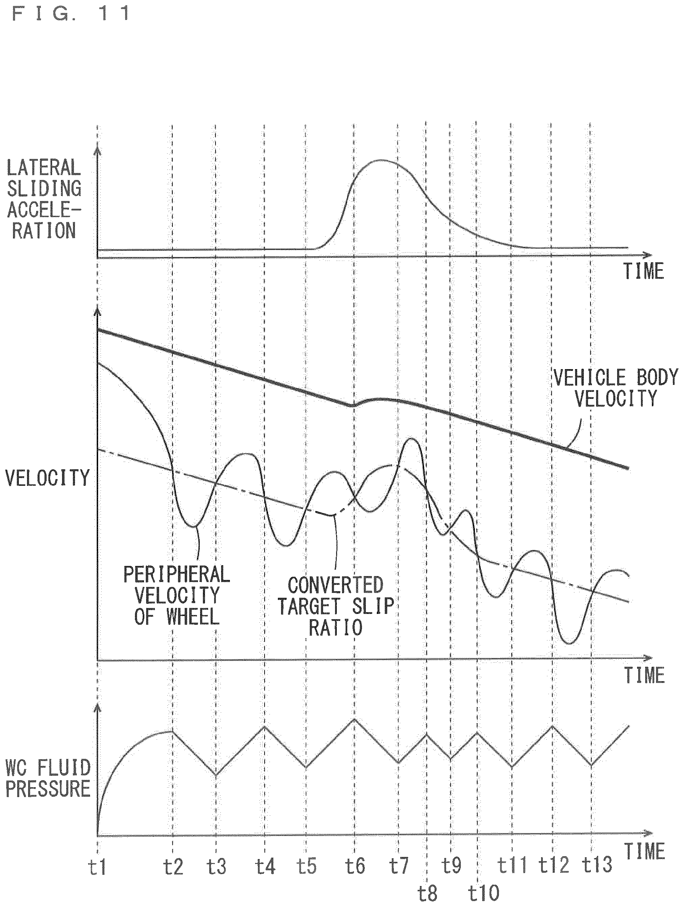

Fig. 11 is a diagram showing one example of the ABS control process of when the vehicle body velocity of the motorcycle 100 decreases due to the brake operation in the first embodiment. An upper graph of Fig. 11 shows a relationship between the lateral sliding acceleration of the wheel and the time. In the upper graph of Fig. 11, the ordinate indicates the absolute value of the lateral sliding acceleration, and the abscissa indicates the time.

A middle graph of Fig. 11 shows a relationship between each of the peripheral velocity of the wheel and the vehicle body velocity, and the time. In the middle graph of Fig. 11, the ordinate indicates the velocity, and the abscissa indicates the time. Further, the vehicle body velocity is indicated by a thick solid line, and the peripheral velocity of the wheel is indicated by a solid line. Further, the target slip ratio converted into the peripheral velocity of the wheel (hereinafter referred to as a converted target slip ratio) is indicated by a one-dot dash line.

In a lower graph of Fig. 11 shows a relationship between the WC fluid pressure and the time. In the lower graph of Fig. 11, the ordinate indicates the WC fluid pressure used for braking of the wheel, and the abscissa indicates the time.

In the example of Fig. 11, as shown in the upper graph of Fig. 11, substantially constant low lateral sliding acceleration is generated at the wheel in periods from a time point t1 to t5, t11 to t13. On the one hand, in a period from the time point t5 to t7, lateral sliding acceleration larger than the lateral sliding acceleration in the periods from the time point t1 to t5, t11 to t13 is generated.

First, the brake operation of the wheel is started by the rider at the time point t1. In this case, as shown in the lower graph of Fig. 11, the WC fluid pressure increases from the time point t1 to the time point t2. At this time, the peripheral velocity of the wheel decreases to be gradually spaced apart from the vehicle body velocity and become close to the converted target slip ratio. That is, the slip ratio of the wheel increases.

Next, the peripheral velocity of the wheel is equal to the converted target slip ratio at the time point t2 and is lower than the converted target slip ratio after the time point t2. In this case, because the current slip ratio is larger than the target slip ratio, the processes of the above-mentioned steps S16, S21, S25 are performed. Thus, the WC fluid pressure decreases from the time point t2 to the time point t3, and the peripheral velocity of the wheel increases to become close to the converted target slip ratio.

Subsequently, the peripheral velocity of the wheel is equal to the converted target slip ratio at the time point t3 and is higher than the converted target slip ratio after the time point t3. In this case, because the current slip ratio is smaller than the target slip ratio, the process of the step S22, described above, is performed. Thus, the WC fluid pressure increases from the time point t3 to the time point t4, and the peripheral velocity of the wheel decreases to become close to the converted target slip ratio.

Subsequently, the peripheral velocity of the wheel is equal to the converted target slip ratio at the time point t4 and is lower than the converted target slip ratio after the time point t4. In this case, similarly to the operation from the time point t2 to the time point t3, the WC fluid pressure decreases, and the peripheral velocity of the wheel increases to become close to the converted target slip ratio.

Thereafter, in a period from the time point t5 to the time point t13, the increase and decrease of the WC fluid pressure are repeated every time a magnitude relationship between the peripheral velocity of the wheel and the converted target slip ratio is inverted, and the peripheral velocity of the wheel changes to become close to the converted target slip ratio. That is, the slip ratio of the wheel changes to become close to the target slip ratio.

In the present example, the lateral sliding acceleration increases in a period from the time point t5 to t11. Therefore, in the period from the time point t5 to t11, the converted target slip ratio is larger than other periods from the time point t1 to t5, t11 to t13. That is, the target slip ratio is small.

Thus, in the period from the time point t5 to t11, the center of amplitude of the peripheral velocity of the wheel changes together with the converted target slip ratio to become close to the vehicle body velocity. That is, the slip ratio of the wheel decreases. In this manner, in the ABS control process, when the lateral sliding acceleration is small, the converted target slip ratio is low, and the target slip ratio is large. On the one hand, when the lateral sliding acceleration is large, the converted target slip ratio is high, and the target slip ratio is small.

When the target slip ratio decreases, the brake force supplied to the wheel decreases. Therefore, in the period from the time point t5 to t11, the deceleration of the vehicle body velocity temporarily decreases due to the decrease of the brake force.

(7) Effects of First Embodiment

In the brake control device 200 according to the present embodiment, during the activation of the ABS, the fluid pressure control unit 30 is controlled such that the slip ratio of the vehicle becomes close to the target slip ratio. The CPU 61 changes the target slip ratio by the correction process based on the magnitude of the lateral sliding acceleration of the wheel such that the margin of the maximum lateral force is ensured. Thus, the lateral sliding of the wheel can be appropriately inhibited. Further, when the magnitude of the lateral sliding acceleration of the wheel is as small as at the time of braking during the travelling of the vehicle in the straight line, the target slip ratio is high, so that an amount of decrease of the brake force for the wheel is small. Therefore, sufficient deceleration is performed at the time of braking.

In this manner, the lateral sliding of the wheel is inhibited and the brake force for the wheel is ensured regardless of the tilt state of the motorcycle 100 and the states of the road surface and the wheel. As a result, the rider can smoothly and easily perform the brake operation of the motorcycle 100.

[2] Second Embodiment

Differences regarding a motorcycle according to the second embodiment from the motorcycle 100 according to the first embodiment will be described below.

(1) Brake Control Device

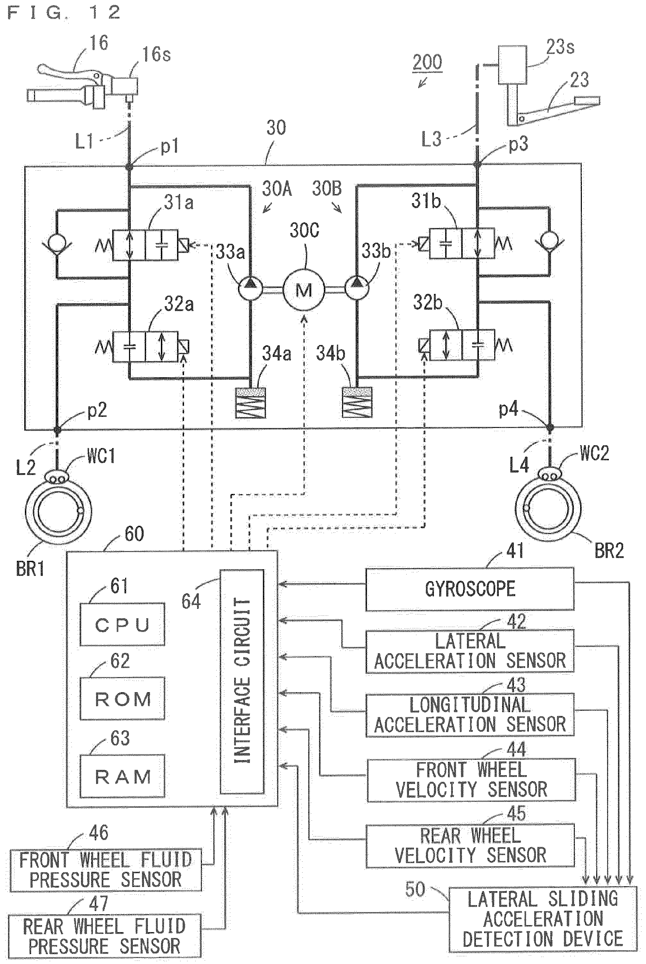

Fig. 12 is a block diagram showing a configuration of the brake control device included in the motorcycle according to the second embodiment. As shown in Fig. 12, the brake control device 200 according to the second embodiment further includes a front wheel fluid pressure sensor 46 and a rear wheel fluid pressure sensor 47 in addition to the configuration of the brake control device 200 (Fig. 3) according to the first embodiment.

The front wheel fluid pressure sensor 46 is attached to the wheel cylinder WC1. The front wheel fluid pressure sensor 46 detects the WC fluid pressure of the wheel cylinder WC1 and supplies a result of detection to the CPU 61 of the ECU 60 for ABS. The rear wheel fluid pressure sensor 47 is attached to the wheel cylinder WC2. The rear wheel fluid pressure sensor 47 detects the WC fluid pressure of the wheel cylinder WC2 and supplies a result of detection to the CPU 61 of the ECU 60 for ABS.

The CPU 61 calculates the brake force supplied to the front wheel 14 by the wheel cylinder WC1 and the brake rotor BR1 based on the result of detection supplied from the front wheel fluid pressure sensor 46. Similarly, the CPU 61 calculates the brake force supplied to the rear wheel 82 by the wheel cylinder WC2 and the brake rotor BR2 based on the result of detection supplied from the rear wheel fluid pressure sensor 47.

The WC fluid pressure of the wheel cylinder WC1 is represented by PWCf, a cross sectional area of the wheel cylinder WC1 is represented by AWCf, friction coefficient of the brake pad incorporated in the brake caliper together with the wheel cylinder WC1 is represented by μf. The number of discs of the brake rotor BR1 is represented by nDf, an effective radius of the disc of the brake rotor BR1 is represented by RDf, and an effective radius of a tire of the front wheel 14 is represented by RWf. In this case, the brake force BFf supplied to the front wheel 14 can be calculated by a following formula (5).

$$BFf = (PWCf \cdot AWCf \cdot \mu f \cdot nDf \cdot RDf) / RWf \cdots (5)$$

Further, the WC fluid pressure of the wheel cylinder WC2 is represented by PWCr, a cross sectional area of the wheel cylinder WC2 is represented by AWCr, and friction coefficient of the brake pad incorporated in the brake caliper together with the wheel cylinder WC2 is represented by μr. The number of discs of the brake rotor BR2 is represented by nDr, an effective radius of the disc of the brake rotor BR2 is represented by RDr, and an effective radius of a tire of the rear wheel 82 is represented by RWr. In this case, the brake force BFr supplied to the rear wheel 82 can be calculated by a following formula (6).

$$BFr = (PWCr \cdot AWCr \cdot \mu r \cdot nDr \cdot RDr) / RWr \cdots (6)$$

The CPU 61 controls the front wheel fluid pressure circuit 30A and the rear wheel fluid pressure circuit 30B based on the brake force BFf, BFr calculated as described above.

(2) Basic Idea of Second Embodiment

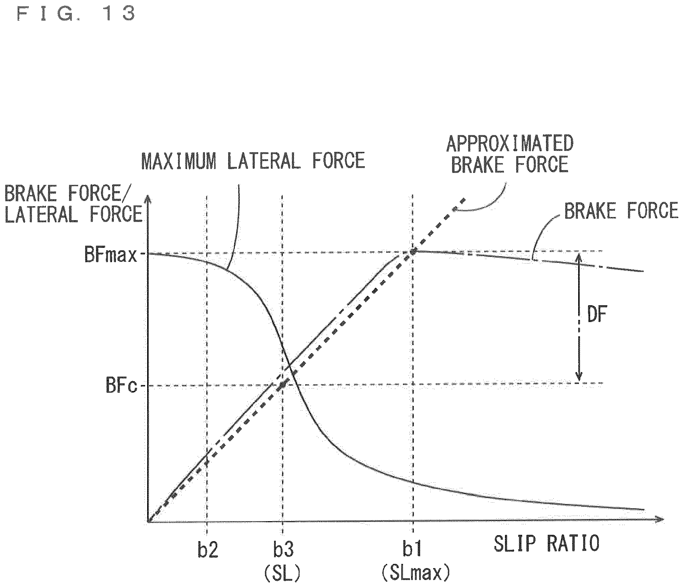

Fig. 13 is a graph for explaining the basic idea of the second embodiment. A relationship between the slip ratio on a predetermined road surface (a dry asphalt road surface, for example) and each of the brake force and the maximum lateral force is shown in Fig. 13. Also in the example of Fig. 13, similarly to the example of Fig. 7, the maximum lateral force refers to the maximum value of the lateral force that can be generated between the wheel (the front wheel 14 or the rear wheel 82) and the road surface. In the graph of Fig. 13, the ordinate indicates the brake force or the lateral force, and the abscissa indicates the slip ratio. Further, the brake force generated between the wheel (the front wheel 14 or the rear wheel 82) and the road surface is indicated by a one-dot dash line. Further, the maximum lateral force is indicated by a solid line.

As shown in Fig. 13, the larger the slip ratio is, the larger the brake force is, and the larger the slip ratio is, the smaller the maximum lateral force is.

Also in the present embodiment, similarly to the first embodiment, the target slip ratio table of Fig. 8 is stored in the ROM 62 of the ECU 60 for ABS. When the ABS control process is performed using the target slip ratio table of Fig. 8, the target slip ratio changes in the range from the value b1 to b2 according to the absolute value of the lateral sliding acceleration of the wheel.

Therefore, as shown in Fig. 13, when the absolute value of the lateral sliding acceleration of the wheel is not more than the value a1 of Fig. 8, the target slip ratio is set to the maximum value b1. When the target slip ratio is set to the value b1, the brake force exerted between the wheel and the road surface is substantially the maximum. Letting the value of the brake force in this case be BFmax.

As indicated by a thick dotted line in Fig. 13, the brake force exerted between the wheel and the road surface in the range from the value b1 to b2 of the slip ratio is approximated by a straight line extending from an origin to coordinates (b1, BFmax). In this case, it can be considered that the brake force exerted between the wheel and the road surface when the slip ratio is a value b3 is a value BFc. The value b3 is smaller than the value b1.

Thus, it can be considered that a difference value DF between the maximum value BFmax and the value BFc of the brake force is an amount of decrease (an amount of insufficiency) of the brake force of when the target slip ratio decreases from the maximum value b1 to the value b3.

In the present embodiment, the CPU 61 calculates an amount of decrease of the brake force for the front wheel 14 during the antilock brake operation of the front wheel 14. It is considered that the brake force BFf calculated by the above-mentioned formula (5) is the brake force exerted between the front wheel 14 and the road surface, the maximum value of the target slip ratio that can be set by the target slip ratio table (the above-mentioned value b1) is represented by SLmax, and the value of the currently set target slip ratio (the above-mentioned value b3) is represented by SL. In this case, the amount of decrease DFf of the brake force for the front wheel 14 can be calculated by a following formula (7).

$$DFf = \{ (SLmax/SL) - 1 \} \cdot BFf \cdots (7)$$

Similarly, during the antilock brake operation of the rear wheel 82, the CPU 61 calculates an amount of decrease of the brake force for the rear wheel 82. It is considered that the brake force BFr calculated by the above-mentioned formula (6) is the brake force exerted between the rear wheel 82 and the road surface, the maximum value of the target slip ratio that can be set by the target slip ratio table (the above-mentioned value b1) is represented by SLmax, and the value of the currently set target slip ratio (the above-mentioned value b3) is represented by SL. In this case, the amount of decrease DFr of the brake force for the rear wheel 82 can be calculated by a following formula (8).

$$DFr = \{ (SLmax/SL) - 1 \} \cdot BFr \cdots (8)$$

The slip ratio of the wheel on which the antilock brake operation is not performed is not more than the target slip ratio. Therefore, in a range in which the slip ratio of the wheel on which the antilock brake operation is not performed does not exceed the target slip ratio, the brake force supplied to the wheel can be increased.

Therefore, when the ABS of the front wheel 14 is activated and the ABS of the rear wheel 82 is not activated, the CPU 61 controls the rear wheel fluid pressure circuit 30B to compensate part or all of the amount of decrease DFf of the brake force for the front wheel 14 generated by the correction process of the ABS of the front wheel 14 (the decrease of the target slip ratio).

Further, when the ABS of the rear wheel 82 is activated and the ABS of the front wheel 14 is not activated, the CPU 61 controls the front wheel fluid pressure circuit 30A to compensate part or all of the amount of decrease DFr of the brake force for the rear wheel 82 generated by the correction process of the ABS of the rear wheel 82 (the decrease of the target slip ratio).

(3) ABS Control Program

In the brake control device according to the present embodiment, similarly to the first embodiment, the ABS control programs for the front wheel 14 and the rear wheel 82 are respectively and independently performed by the CPU 61 of Fig. 12. Thus, the ABS control process based on each ABS control program and a brake force compensation process, described below, are performed. Each ABS control process includes the compensation process that changes the target slip ratio.

In the following description, in order to facilitate understanding of the respective ABS control processes for the front wheel 14 and the rear wheel 82, one wheel of the front wheel 14 and the rear wheel 82 is referred to as a first wheel, and the other wheel of the front wheel 14 and the rear wheel 82 is referred to as a second wheel. When the front wheel 14 is equivalent to the first wheel, the rear wheel is equivalent to the second wheel. Further, when the rear wheel 82 is equivalent to the first wheel, the front wheel 14 is equivalent to the second wheel.

Similarly to the first embodiment, the target slip ratio table is used for the correction process in the ABS control process. As the target slip ratio table, the target slip ratio table of Fig. 8 can be used, for example.

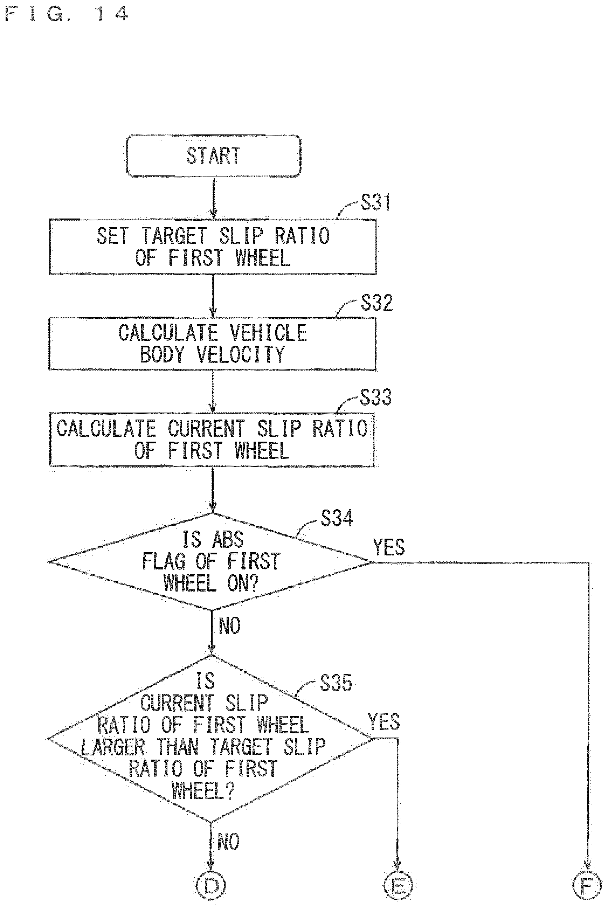

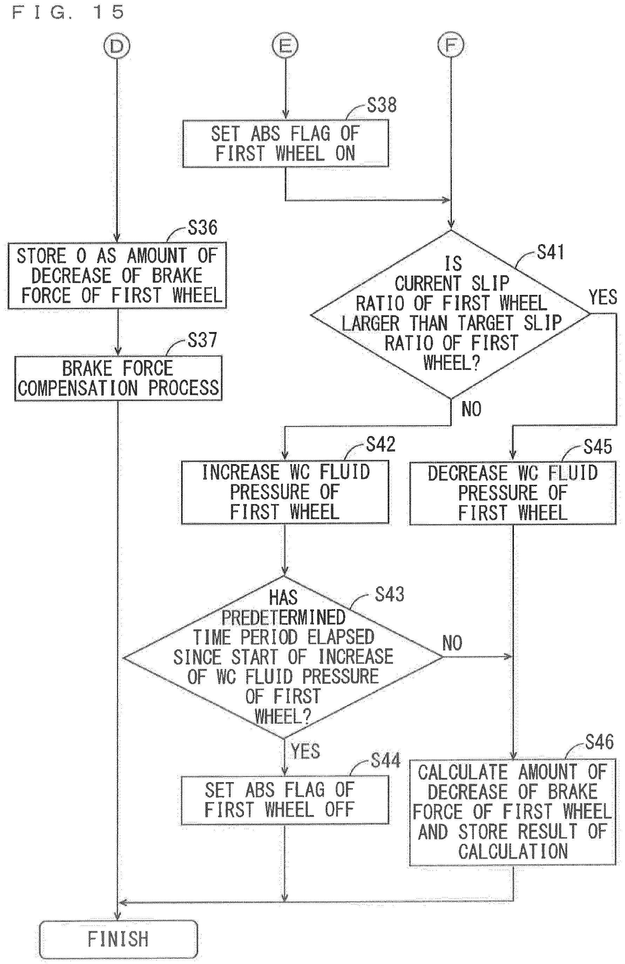

Figs. 14 and 15 are flow charts of the ABS control process based on the ABS control program according to the second embodiment. The ABS control process of Figs. 14 and 15 is repeatedly performed in a period of not less than 1 msec and not more than 20 msec, for example. Further, while only the ABS control process for the first wheel is described in the following description, the ABS control process for the second wheel is performed independently from the ABS control process for the first wheel.

First, the CPU 61 sets the target slip ratio of the first wheel by acquiring the target slip ratio corresponding to the absolute value of the lateral sliding acceleration of the first wheel supplied from the lateral sliding acceleration calculator 53 of Fig. 5 from the target slip ratio table stored in the ROM 62 of Fig. 12 (step S31).

Subsequently, the CPU 61 calculates the vehicle body velocity V similarly to the process of the step S12 of Fig. 9 (step S32). Further, the CPU 61 calculates the current slip ratio of the first wheel similarly to the process of the step S13 of Fig. 9 (step S33).

Thereafter, the CPU 61 determines whether the ABS flag of the first wheel stored in the RAM 63 of Fig. 12 is in the ON state (step S34). In the present embodiment, the ON state of the ABS flag of the first wheel indicates that the ABS is activated for the first wheel. The OFF state of the ABS flag of the first wheel indicates that the ABS is not activated for the first wheel. In the initial state, the ABS flag of the first wheel is in the OFF state.

When the ABS flag of the first wheel is in the OFF state, the CPU 61 determines whether the current slip ratio of the first wheel calculated in the latest step S33 is larger than the target slip ratio of the first wheel set in the latest step S31 (step S35).

In the step S35, when the current slip ratio of the first wheel is not more than the target slip ratio of the first wheel, the margin of the lateral force of the first wheel is a positive value. Thus, sufficient lateral force is generated between the first wheel and the road surface, so that the lateral sliding of the first wheel does not occur. In this case, the CPU 61 maintains the state in which the ABS is not activated for the first wheel, and stores 0 in the RAM 63 as the amount of decrease of the brake force of the first wheel (step S36). Further, the CPU 61 performs the brake force compensation process (step S37). Details of the brake force compensation process of the step S37 will be described below. Thereafter, the CPU 61 returns to the process of the step S31.

In the step S35, when the current slip ratio of the first wheel is larger than the target slip ratio of the first wheel, the margin of the lateral force of the first wheel is a negative value, and the lateral sliding of the first wheel occurs. Therefore, the CPU 61 sets the ABS flag of the first wheel in the ON state similarly to the step S16 of Fig. 10 in order to inhibit the lateral sliding of the first wheel (step S38). Thus, the ABS is activated for the first wheel.

When the ABS flag of the first wheel is in the ON state in the step S34, and when the ABS flag of the first wheel is set in the ON state in the step S38, the CPU 61 determines whether the current slip ratio of the first wheel calculated in the latest step S33 is larger than the target slip ratio of the first wheel set in the latest step S31 (step S41).

In the step S41, when the current slip ratio of the first wheel is not more than the target slip ratio of the first wheel, the CPU 61 performs the process similar to the steps S22, S23 of Fig. 10. That is, the CPU 61 increases the WC fluid pressure of the first wheel (step S42) and determines whether a predetermined time period has elapsed since the start of the increase of the WC fluid pressure of the first wheel (step S43).

When the predetermined time period has elapsed since the start of the increase of the WC fluid pressure of the first wheel, the CPU 61 sets the ABS flag of the first wheel in the OFF state similarly to the step S24 of Fig. 10 (step S44) and returns to the process of the step S31. Thus, the ABS for the first wheel is stopped.

When the current slip ratio of the first wheel is larger than the target slip ratio of the first wheel in the step S41, the CPU 61 decreases the WC fluid pressure of the first wheel similarly to the step S25 of Fig. 10 (step S45).

When the predetermined time period has not elapsed since the start of the increase of the WC fluid pressure of the first wheel in the step S43 or after the process of the step S45, the CPU 61 calculates the amount of decrease of the brake force for the first wheel using the above-mentioned formula (7), and stores the result of calculation in the RAM 63 as the amount of decrease of the brake force of the first wheel (step S46). The result of calculation in this case is larger than 0. Thereafter, the CPU 61 returns to the process of the step S31.

In the ABS control process for the second wheel, a process in which "the first wheel" of each step in the above-mentioned ABS control process for the first wheel is changed to "the second wheel" is performed. Thus, when the ABS is not activated for the second wheel, the CPU 61 stores 0 in the RAM 63 as the amount of decrease of the brake force of the second wheel in the step equivalent to the step S36, described above. Thereafter, the CPU 61 performs the brake force compensation process. Further, when the ABS is activated for the second wheel, the CPU 61 calculates the amount of decrease of the brake force for the second wheel using the above-mentioned formula (8) in the step equivalent to the step S46, described above. A result of calculation in this case is larger than 0. Further, the CPU 61 stores the result of calculation in the RAM 63 as the amount of decrease of the brake force of the second wheel.

As described above, the ABS control processes for the first wheel and the second wheel are performed, whereby 0 is stored in the RAM 63 as the amount of decrease of the brake force of the first wheel when the ABS is not activated for the first wheel. Further, when the ABS is activated for the first wheel, the result of calculation of the amount of decrease of the brake force of the first wheel larger than 0 is stored in the RAM 63. Similarly, when the ABS is not activated for the second wheel, 0 is stored in the RAM 63 as the amount of decrease of the brake force of the second wheel. Further, when the ABS is activated for the second wheel, the result of calculation of the amount of decrease of the brake force of the second wheel larger than 0 is stored in the RAM 63.

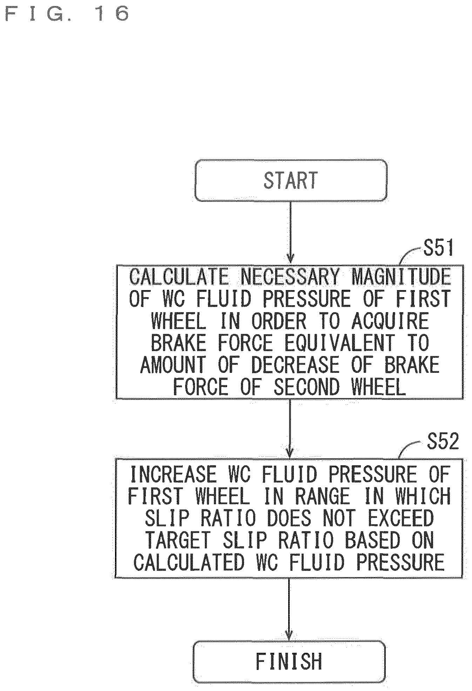

Fig. 16 is a flow chart of the brake force compensation process of the step S37 of Fig. 15. In the ABS control process for the first wheel, when the brake force compensation process of the step S37 of Fig. 15 is started, the CPU 61 calculates the WC fluid pressure of the wheel cylinder WC1 required in order to acquire the brake force equivalent to the amount of decrease of the brake force of the second wheel based on the amount of decrease of the brake force of the second wheel stored in the RAM 63 using the above-mentioned formula (5) (step S51). Thereafter, the CPU 61 increases the WC fluid pressure of the wheel cylinder WC1 in a range in which the slip ratio of the first wheel does not exceed the target slip ratio based on the calculated WC fluid pressure (step S52) and returns to the process of the step S31 of Fig. 14.

In the step S51, when the amount of decrease of the brake force of the second wheel stored in the RAM 63 is 0, the ABS is not activated for the second wheel. In this case, the WC fluid pressure of the wheel cylinder WC1 required in order to acquire the brake force equivalent to the amount of decrease of the brake force of the second wheel is 0. Therefore, the WC fluid pressure of the first wheel is not increased in the step S52.

In this manner, when the ABS is activated for the second wheel and the ABS is not activated for the first wheel, part or all of the amount of decrease of the brake force of the second wheel generated by the correction process of the ABS of the second wheel is compensated by the brake force supplied to the first wheel. As a result, the decrease of the brake force exerted on the entire motorcycle 100 is inhibited.

On the one hand, in the step equivalent to the step S51, described above, for the second wheel, the CPU 61 calculates the WC fluid pressure of the wheel cylinder WC2 required in order to acquire the brake force equivalent to the amount of decrease of the brake force of the first wheel based on the amount of decrease of the brake force of the first wheel stored in the RAM 63 using the above-mentioned formula (6). Thereafter, in the step equivalent to the step S52, described above, the CPU 61 increases the WC fluid pressure of the wheel cylinder WC2 in a range in which the slip ratio of the second wheel does not exceed the target slip ratio based on calculated WC fluid pressure and returns to the process of step S31 of Fig. 14.

In the step corresponding to the step S51, described above, when the amount of decrease of the brake force of the first wheel stored in the RAM 63 is 0, the ABS is not activated for the first wheel. In this case, the WC fluid pressure of the wheel cylinder WC2 required in order to acquire the brake force equivalent to the amount of decrease of the brake force of the first wheel is 0. Therefore, the WC fluid pressure of the second wheel is not increased in the subsequent step.

In this manner, when the ABS is activated for the first wheel and the ABS is not activated for the second wheel, part or all of the amount of decrease of the brake force of the first wheel generated by the correction process of the ABS of the first wheel is compensated by the brake force supplied to the second wheel. As a result, the decrease of the brake force exerted on the entire motorcycle 100 is inhibited.

(4) Control Example

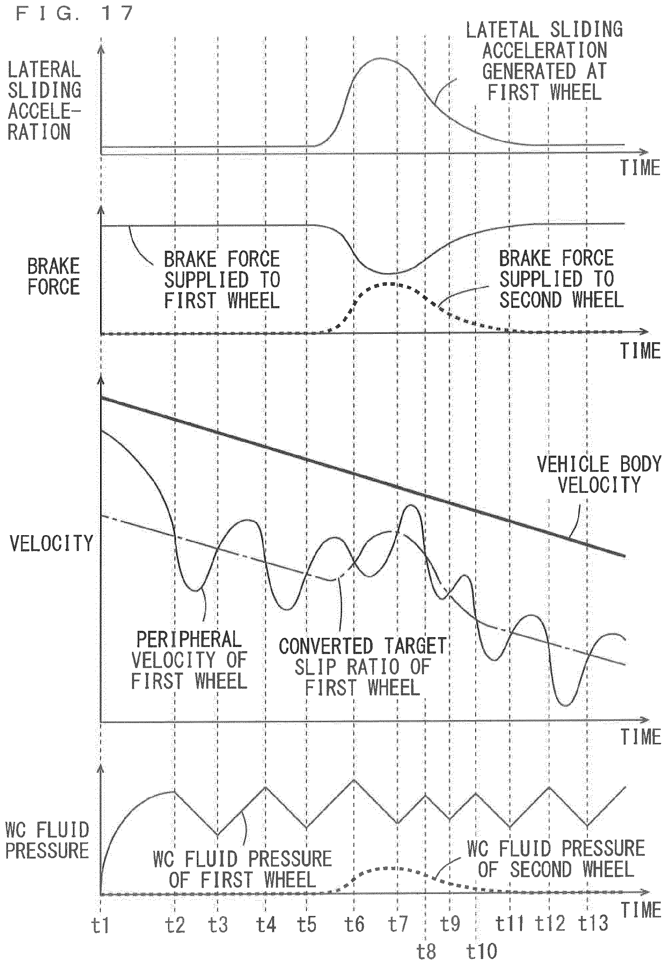

Fig. 17 is a diagram showing one example of the ABS control process of when the vehicle body velocity of the motorcycle 100 decreases due to the brake operation in the second embodiment. A top graph of Fig. 17 shows a relationship between the lateral sliding acceleration of the first wheel and the time. In the top graph of Fig. 17, the ordinate indicates the absolute value of the lateral sliding acceleration, and the abscissa indicates the time.

A second graph from the top of Fig. 17 shows a relationship between the brake force supplied to each of the first wheel and the second wheel, and the time period. In the second graph from the top of Fig. 17, the ordinate indicates the brake force, and the abscissa indicates the time. Further, the brake force supplied to the first wheel is indicated by a solid line, and the brake force supplied to the second wheel is indicated by a thick dotted line.

A third graph from the top of Fig. 17 shows a relationship between each of the peripheral velocity of the first wheel and the vehicle body velocity, and the time. In the third graph from the top of Fig. 17, the ordinate indicates the velocity, and the abscissa indicates the time. Further, the vehicle body velocity is indicated by a thick solid line, and the peripheral velocity of the first wheel is indicated by a solid line. Further, the converted target slip ratio of the first wheel is indicated by a one-dot dash line.

A bottom graph of Fig. 17 indicates a relationship between the WC fluid pressure of each of the first wheel and the second wheel, and the time. In the lower graph of Fig. 17, the ordinate indicates the WC fluid pressure, and the abscissa indicates the time. Further, the WC fluid pressure of the first wheel is indicated by a solid line, and the WC fluid pressure of the second wheel is indicated by a thick dotted line.

In the example of Fig. 17, similarly to the example of Fig. 11, substantially constant low lateral sliding acceleration is generated at the first wheel in periods from time point t1 to t5, t11 to t13. On the one hand, in a period from t5 to t7, lateral sliding acceleration larger than the lateral sliding acceleration in the periods from the time point t1 to t5, t11 to t13 is generated at the first wheel. Thus, in a period from the time points t1 to t13, similarly to the example of Fig. 11, the lateral sliding acceleration generated at the first wheel, the peripheral velocity of the first wheel, the converted target slip ratio of the first wheel and the WC fluid pressure of the first wheel change.

As shown in the third graph from the top of Fig. 17, in a period from the time point t5 to t11, the converted target slip ratio of the first wheel is large. That is, the target slip ratio of the first wheel is small. Thus, as shown in the second graph from the top of Fig. 17, the brake force supplied to the first wheel is small. In the present embodiment, when the ABS is not activated for the second wheel, the amount of decrease of the brake force of the first wheel is compensated by the brake force supplied to the second wheel by the brake force compensation process of the step S37, described above.

Therefore, in the example of Fig. 17, as shown in the bottom graph, the WC fluid pressure of the second wheel is temporarily increased in the period from the time point t5 to t11. Thus, as shown in the second graph from the top, the brake force supplied to the second wheel temporarily increases in the period from the time point t5 to t11. As a result, the decrease of the brake force exerted on the entire motorcycle 100 is inhibited, and the decrease of the deceleration of the motorcycle 100 is inhibited.

(5) Effects of Second Embodiment

As described above, in the present embodiment, when the ABS is activated for the rear wheel 82 and the ABS is not activated for the front wheel 14, the amount of decrease of the brake force of the rear wheel 82 generated by the correction process of the ABS of the rear wheel 82 is compensated by the brake force supplied to the first wheel. As a result, the decrease of the brake force exerted on the entire motorcycle 100 is inhibited.

Similarly, when the ABS is activated for the front wheel 14 and the ABS is not activated for the rear wheel 82, the amount of decrease of the brake force of the front wheel 14 generated by the correction process of the ABS of the front wheel 14 is compensated by the brake force supplied to the rear wheel 82. As a result, the decrease of the brake force exerted on the entire motorcycle 100 is inhibited.

[3] Other Embodiments

(1) In the above-mentioned embodiment, the target slip ratio is changed by the ABS control process such that the larger the absolute value of the lateral sliding acceleration of the wheel detected by the lateral sliding acceleration detection device 50 is, the lower the target slip ratio is. While the antilock brake operation of the wheel is corrected in this manner, the correction of the antilock brake operation is not limited to the above-mentioned example.

Instead of the correction of the antilock brake operation by changing of the target slip ratio, the correction of the antilock brake operation may be performed by a following method.

In the present example, the target slip ratio in the antilock brake operation is constant. In the following description, the target slip ratio of the present example is referred to as a fixed target slip ratio such that the target slip ratio used in the above-mentioned embodiment can be discriminated. Further, in the present example, a WC fluid pressure decrease rate table is stored in the ROM 62 of the ECU 60 for ABS instead of the target slip ratio table of Fig. 8.

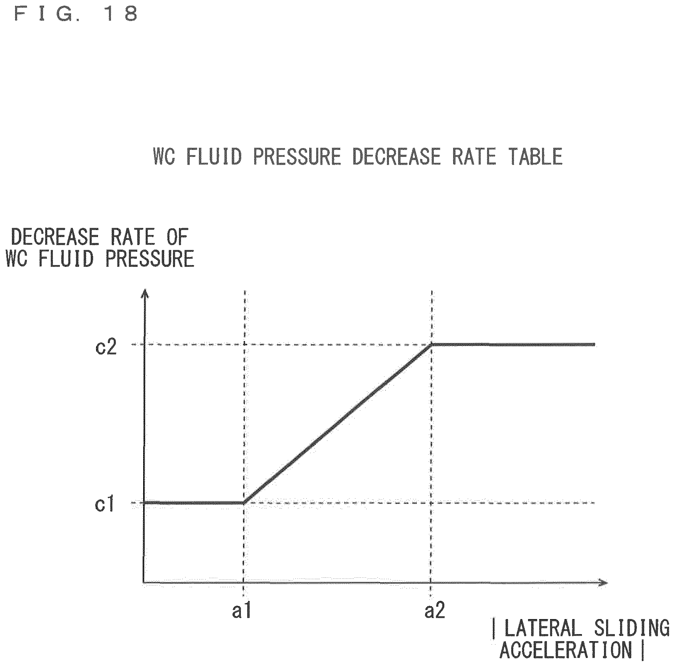

The CPU 61 of the ECU 60 for ABS controls the fluid pressure control unit 30 based on the WC fluid pressure decrease rate table. Fig. 18 is a graph showing one example of the WC fluid pressure decrease rate table. In the graph of Fig. 18, the ordinate indicates the decrease rate of the WC fluid pressure, and the abscissa indicates the absolute value of the lateral sliding acceleration of the wheel. In the WC fluid pressure decrease rate table, a relationship between the absolute value of the lateral sliding acceleration and the decrease rate of the WC fluid pressure of the wheel is set in advance.

According to the WC fluid pressure decrease rate table of Fig. 18, in a range in which the absolute value of the lateral sliding acceleration is from a value a1 to a value a2, the decrease rate of the WC fluid pressure is set to increase from a value c1 to a value c2 as the absolute value of the lateral sliding acceleration increases. The value a2 is larger than the value a1. Further, the value c2 is larger than the value c1. In a range in which the absolute value of the lateral sliding acceleration is not more than the value a1, the decrease rate of the WC fluid pressure is set to the constant value c1. In a range in which the absolute value of the lateral sliding acceleration is not less than the value a2, the decrease rate of the WC fluid pressure is set to the constant value c2.

The decrease rate of the WC fluid pressure is set in this manner, so that the larger the absolute value of the lateral sliding acceleration is, the higher the decrease rate of the WC fluid pressure is, when the absolute value of the lateral sliding acceleration of the wheel is in the range between the value a1 and the value a2. Specifically, the larger the absolute value of the lateral sliding acceleration is, the more sufficiently the CPU 61 increases the rotation velocity of the pumps 33a, 33b of when the WC fluid pressure is decreased.

In this case, when the absolute value of the lateral sliding acceleration is large, the decrease rate of the WC fluid pressure is larger than an increase rate of the WC fluid pressure, so that a center value of an amplitude of the slip ratio of the wheel (hereinafter referred to as an average slip ratio) changes to be lower than the fixed target slip ratio. In this manner, when the average slip ratio of the wheel is lower than the fixed target slip ratio, the margin of the maximum lateral force increases similarly to the above-mentioned embodiment. Thus, it is possible to acquire a substantially equal effect to the effect of when the correction of the antilock brake operation is performed by changing of the target slip ratio.

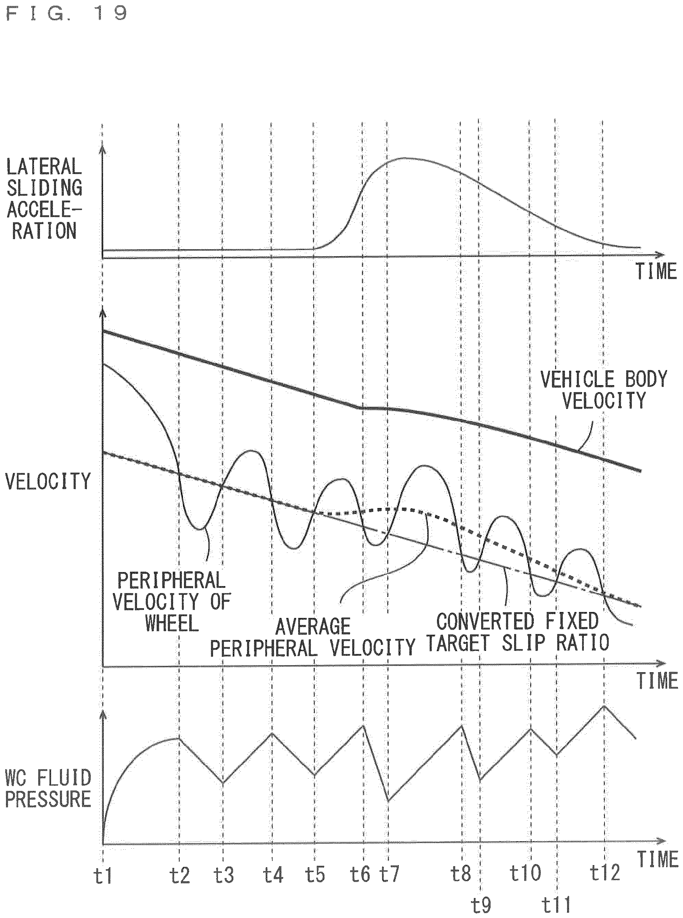

Fig. 19 is a diagram showing one example of the ABS control process of when the vehicle body velocity of the motorcycle 100 decreases due to the brake operation in another embodiment. A top graph of Fig. 19 shows a relationship between the lateral sliding acceleration of the wheel and the time. In the upper graph of Fig. 19, the ordinate indicates the absolute value of the lateral sliding acceleration, and the abscissa indicates the time.

A middle graph of Fig. 19 shows a relationship between each of the peripheral velocity of the wheel and the vehicle body velocity, and the time. In the middle graph of Fig. 19, the ordinate indicates the velocity, and the abscissa indicates the time. Further, the vehicle body velocity is indicated by a thick solid line, and the peripheral velocity of the wheel is indicated by a solid line. Further, the fixed target slip ratio converted into the peripheral velocity of the wheel (hereinafter referred to as a converted fixed target slip ratio) is indicated by a one-dot and dash line. Further, the center of the amplitude of the peripheral velocity of the wheel (hereinafter referred to as an average peripheral velocity) is indicated by a thick dotted line.

A lower graph of Fig. 19 shows a relationship between the WC fluid pressure and the time. In the lower graph of Fig. 19, the ordinate indicates the WC fluid pressure used for braking of the wheel, and the abscissa indicates the time. In the example of Fig. 19, as shown in the upper graph of Fig. 19, substantially constant low lateral sliding acceleration is generated at the wheel in a period from time point t1 to t5. On the one hand, in a period from time point t5 to t12, lateral sliding acceleration larger than the lateral sliding acceleration in the period from the time points t1 to t5 is generated.

First, the brake operation of the wheel is started by the rider at the time point t1. Thereafter, an increase and the decrease of the WC fluid pressure are repeated every time a magnitude relationship between the peripheral velocity of the wheel and the converted fixed target slip ratio is inverted in the period from the time point t1 to t5, and the peripheral velocity of the wheel changes to become close to the converted fixed target slip ratio. At this time, the magnitude of the increase rate of the WC fluid pressure and the magnitude of the decrease rate of the WC fluid pressure are substantially the same. Therefore, in the period from the time point t1 to t5, the average peripheral velocity of the wheel substantially coincides with the converted fixed target slip ratio. That is, the average slip ratio of the wheel substantially coincides with the fixed target slip ratio.

As described above, the lateral sliding acceleration increases in the period from the time point t5 to t12. Therefore, in the period from the time point t5 to t12, the decrease rate of the WC fluid pressure is high and the average peripheral velocity of the wheel is high as compared to the period from the time point t1 to t5. That is, the average slip ratio of the wheel decreases.

Thus, in the period from the time point t5 to t12, the average peripheral velocity of the wheel changes to become close to the vehicle body velocity regardless of the converted fixed target slip ratio. That is, the average slip ratio of the wheel decreases. In this manner, when the lateral sliding acceleration is small in the present example, the average peripheral velocity of the wheel is low, and the average slip ratio of the wheel is large. On the one hand, when the lateral sliding acceleration is large, the average peripheral velocity of the wheel is high, and the average slip ratio of the wheel is small.

When the average slip ratio of the wheel decreases, the brake force supplied to the wheel decreases. Therefore, in the period from the time point t5 to t12, the deceleration of the vehicle body velocity is small as compared to the period from the time point t1 to t5 due to the decrease of the brake force.

(2) While the lateral sliding acceleration detection device 50 detects the lateral sliding acceleration as one example of a degree of the lateral sliding that occurs in the left-and-right direction of the motorcycle 100 in the above-mentioned embodiment, the invention is not limited to this. As another example of the degree of the lateral sliding, the slip angle may be detected. The slip angle refers to a tilt of a plane passing through a central axis of a tire with respect to an advancing direction of the motorcycle 100 on the road surface. In this case, the correction of the antilock brake operation may be performed based on the detected slip angle. For example, when the slip angle is detected, the target slip ratio may be changed such that the larger the magnitude of the slip angle of the wheel is, the smaller the target slip ratio is. Further, the invention is not limited to this. A slip angle differential value (an amount of change of the slip angle per unit time) may be detected as another example of the degree of the lateral sliding. In this case, the correction of the antilock brake operation may be performed based on the detected slip angle differential value.

Further, while the CPU 61 of Figs. 3 and 12 calculates the slip ratios SLf, SLr as one example of the current degrees of the longitudinal sliding of the front wheel 14 and the rear wheel 82 in the above-mentioned embodiment, the invention is not limited to this. As another example of the degree of the longitudinal sliding, a slip amount (a difference between the peripheral velocity of the wheel and the vehicle body velocity) or a wheel acceleration difference (a difference between the vehicle body acceleration and the wheel acceleration) may be calculated. In this case, the ABS may be activated based on the calculated slip amount, the wheel acceleration difference or the like.

(3) In the above-mentioned embodiment, the WC fluid pressure of the front wheel 14 and the rear wheel 82 is adjusted by the fluid pressure control unit 30 and the brake hoses L1 to L4 in order to supply the brake force to the front wheel 14 and the rear wheel 82. A mechanical type brake that presses the brake pad against the brake rotor may be used by activation of an electric motor instead of the fluid pressure type brake that adjusts the pressure of such brake fluid. In this case, the electric motor is controlled, so that the brake force supplied to the wheel can be adjusted.

(4) In the above-mentioned embodiment, the CPU 61 of Figs. 3 and 12 decreases and increases the WC fluid pressure during the activation of the ABS as shown in Figs. 4(b), 4(c). In this case, as shown by the lower column of Fig. 11 and the bottom column of Fig. 17, the WC fluid pressure during the activation of the ABS increases and decreases.

However, the invention is not limited to this. In addition to the period in which the WC fluid pressure decreases and the period in which the WC fluid pressure increases during the operation of the ABS, a period in which the WC fluid pressure is kept at the constant pressure may be provided. When the WC fluid pressure is kept at the constant pressure, the CPU 61 closes the holding valve 31a of Fig. 3, closes the pressure reducing valve 32a and stops the pump 33a, for example. In this case, a path of the brake fluid between the front wheel master cylinder 16s and the wheel cylinder WC1 and a path of the brake fluid between the reservoir 34a and the wheel cylinder WC1 are cut off by the holding valve 31a and the pressure reducing valve 32a. Thus, the pressure of the brake fluid by the wheel cylinder WC1 is kept constant.

As described above, in the period in which the WC fluid pressure decreases during the activation of the ABS, the period in which the WC fluid pressure increases and the period in which the WC fluid pressure is kept constant are combined, whereby the WC fluid pressure can be changed at any inclination. In this case, the WC fluid pressure can be changed such that the amplitude of the slip ratio decreases.

(5) In the second embodiment, as indicated by the thick dotted line in Fig. 13, the brake force exerted between the wheel and the road surface in the range from the value b1 to b2 of the slip ratio is approximated by the straight line extending from the origin position to the coordinates (b1, BFmax). However, the invention is not limited to this. The brake force exerted between the wheel and the road surface in the range from the value b1 to b2 of the slip ratio may be approximated by a different straight line or a curve according to the state of the road surface, for example. In this case, the CPU 61 of Fig. 12 determines the state of the road surface based on the change ratio of the slip ratio. Thereafter, the CPU 61 calculates the amount of decrease of the brake force in the front wheel 14 and the rear wheel 82 by using a formula different from the above-mentioned formulas (7) and (8) based on the approximated straight line or curve according to the result of determination.

(6) While the target slip ratio linearly decreases from the value b1 to b2 as the absolute value of the lateral sliding acceleration increases from the value a1 to a2 in the target slip ratio table of Fig. 8 used in the above-mentioned embodiment, the invention is not limited to this. In the target slip ratio table, the target slip ratio may decrease in steps or may decrease in a curve from the value b1 to b2. Further, the value a1 of the absolute value of the lateral sliding acceleration may be 0.

(7) While the decrease rate of the WC fluid pressure linearly increases from the value c1 to c2 as the absolute value of the lateral sliding acceleration increases from the value a1 to a2 in the above-mentioned WC fluid pressure decrease rate table of Fig. 18, the invention is not limited to this. In the WC fluid pressure decrease rate table, the decrease rate of the WC fluid pressure may decrease in steps or may decrease in a curve from the value c1 to c2. Further, the value a1 of the absolute value of the lateral sliding acceleration may be 0.

(8) While the ABS control processes are respectively performed for the front wheel 14 and the rear wheel 82 in the first and second embodiments, the invention is not limited to this. The above-mentioned ABS control process may be performed on only one of the front wheel 14 and the rear wheel 82.

(9) While the motorcycle 100 was described as one example of the straddled vehicle in the above-mentioned embodiment, the present invention is not limited to this. The present invention can be applied to another straddled vehicle such as a motor tricycle, a four-wheeled automobiles or the like. In this case, the above-mentioned ABS control process may be performed on every wheel.

[4] Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the front wheel 14 or the rear wheel 82 is an example of a first wheel, the motorcycle 100 is an example of a straddled vehicle, the brake control device 200 is an example of a brake control device, and the front wheel fluid pressure circuit 30A or the rear wheel fluid pressure circuit 30B is an example of a first brake device.

Further, the slip ratio of the front wheel 14 or the rear wheel 82 and the slip ratio of the first wheel or the second wheel are examples of a slip ratio of a first wheel and a longitudinal sliding degree of a first wheel, the CPU 61 is an example of a longitudinal sliding detection device and a controller, the lateral sliding acceleration detection device 50 is an example of a lateral sliding detection device, the lateral sliding acceleration detected by the lateral sliding acceleration detection device 50 is an example of a lateral sliding degree, the target slip ratio of the front wheel 14 or the rear wheel 82 and the target slip ratio of the first wheel or the second wheel are examples of a first target slip ratio and a first target longitudinal sliding degree.

Further, the value a1 is an example of a first value, the value a2 is an example of a second value, the value b1 is an example of a third value, the value b2 is an example of a fourth value, the target slip ratio table is an example of a correspondence relationship between magnitude of lateral sliding acceleration of a first wheel and a target slip ratio, and the ROM 62 of the ECU 60 for ABS is an example of a storage.

Further, the rear wheel 82 or the front wheel 14 is an example of a second wheel, the rear wheel fluid pressure circuit 30B or the front wheel fluid pressure circuit 30A is an example of a second brake device, the slip ratio of the rear wheel 82 or the front wheel 14 and the slip ratio of the second wheel or the first wheel are examples of a slip ratio of a second wheel and a longitudinal sliding degree of a second wheel, and the target slip ratio of the rear wheel 82 or the front wheel 14 and the target slip ratio of the second wheel or the first wheel are examples of a second target slip ratio and a second target longitudinal sliding degree.

As each of constituent elements recited in the claims, various other elements having configurations or functions described in the claims can be also used.

[Industrial Applicability]

The present invention can be effectively utilized as a brake system of various vehicles.

## Claims

1. A brake control device (200) for a straddled vehicle (100) having a first wheel (14, 82), comprising:

   a first brake device (30A, 30B) configured to supply brake force to the first wheel (14, 82);
   a longitudinal sliding detection device (61) configured to detect a longitudinal sliding degree of the first wheel (14, 82);
   a lateral sliding detection device (50) configured to detect a lateral sliding degree of the first wheel (14, 82); and
   a controller (61) for performing a first antilock brake operation that controls the first brake device such that the longitudinal sliding degree of the first wheel (14, 82) detected by the longitudinal sliding detection device (61) becomes close to a first target longitudinal sliding degree, wherein
   the controller (61) is configured to perform a first correction process that corrects the first antilock brake operation to inhibit lateral sliding of the first wheel (14, 82) based on a result of detection of the lateral sliding detection device (50),
   wherein the controller (61) is configured to correct the first antilock brake operation such that the larger the lateral sliding degree of the first wheel (14, 82) detected by the lateral sliding detection device (50) is, the smaller the longitudinal sliding degree of the first wheel (14, 82) is, as the first correction process.

2. The brake control device (200) according to claim 1, wherein
   the lateral sliding detection device (50) is configured to detect lateral sliding acceleration of the first wheel (14, 82) as the lateral sliding degree of the first wheel (14, 82), and
   the controller (61) is configured to correct the first antilock brake operation by changing the first target longitudinal sliding degree such that the larger magnitude of the lateral sliding acceleration of the first wheel (14, 82) detected by the lateral sliding detection device (50) is, the smaller the first target longitudinal sliding degree is, as the first correction process.

3. The brake control device (200) according to claim 2, wherein
   the controller (61) is configured to change the first target longitudinal sliding degree such that the first target longitudinal sliding degree decreases from a third value to a fourth value smaller than the third value as the magnitude of the lateral sliding acceleration of the first wheel (14, 82) detected by the lateral sliding detection device (50) increases, when the magnitude of the lateral sliding acceleration of the first wheel (14, 82) detected by the lateral sliding detection device (50) is in a range between a first value and a second value larger than the first value.

4. The brake control device (200) according to claim 3, wherein

the controller (61) is configured to set the first target longitudinal sliding degree to the third value when the magnitude of the lateral sliding acceleration of the first wheel (14, 82) detected by the lateral sliding detection device (50) is not more than the first value.

5. The brake control device (200) according to claim 3 or 4, wherein
the controller (61) is configured to set the first target longitudinal sliding degree to the fourth value when the magnitude of the lateral sliding acceleration of the first wheel (14, 82) detected by the lateral sliding detection device (50) is not less than the second value.

6. The brake control device (200) according to any one of claims 3 to 5, further comprising a storage (62) configured to store a correspondence relationship between the magnitude of the lateral sliding acceleration of the first wheel (14, 82) and a target longitudinal sliding degree, wherein
the correspondence relationship is set in advance such that the target longitudinal sliding degree decreases from the third value to the fourth value as the magnitude of the lateral sliding acceleration of the first wheel (14, 82) increases, and
the controller (61) is configured to acquire the target longitudinal sliding degree corresponding to the magnitude of the lateral sliding acceleration of the first wheel (14, 82) detected by the lateral sliding detection device (50) from the correspondence relationship stored in the storage, and to set the acquired target longitudinal sliding degree as the first target longitudinal sliding degree as the first correction process.

7. The brake control device (200) according to claim 1, wherein
the lateral sliding detection device (50) is configured to detect a slip angle of the first wheel (14, 82) as the lateral sliding degree of the first wheel (14, 82), and
the controller (61) is configured to correct the first antilock brake operation by changing the first target longitudinal sliding degree such that the larger magnitude of the slip angle of the first wheel (14, 82) detected by the lateral sliding detection device (50) is, the smaller the first target longitudinal sliding degree is, as the first correction process.

8. The brake control device (200) according to any one of claims 1 to 7, wherein
the straddled vehicle (100)
further has a second wheel (14, 82), and
further comprises a second brake device (30A, 30B) that supplies the brake force to the second wheel (14, 82),
the longitudinal sliding detection device (61) is configured to detect a longitudinal sliding degree of the second wheel (14, 82),
the lateral sliding detection device (50) is configured to detect a lateral sliding degree of the second wheel (14, 82), and
the controller (61) is configured to perform a second antilock brake operation for controlling the second brake device such that the longitudinal sliding degree of the second wheel (14, 82) detected by the longitudinal sliding detection device (61) becomes close to a second target longitudinal sliding degree, and to perform a second correction process for correcting the second antilock brake operation by changing the second target longitudinal sliding degree such that the larger the lateral sliding degree of the second wheel (14, 82) detected by the lateral sliding detection device (50) is, the smaller the second target longitudinal sliding degree is.

9. The brake control device (200) according to claim 8, wherein
the controller (61) is configured to increase the brake force by the second brake device to compensate at least part of an amount of decrease of the brake force by the first brake device (30A, 30B), the amount of decrease being generated by performance of the first correction process, when the first antilock brake operation is performed and the second antilock brake operation is not performed.

10. The brake control device (200) according to claim 8 or 9, wherein
the controller (61) is configured to increase the brake force by the first brake device (30A, 30B) to compensate at least part of an amount of decrease of the brake force by the second brake device, the amount of decrease being generated by performance of the second correction process, when the second antilock brake operation is performed and the first antilock brake operation is not performed.

11. The brake control device (200) according to any one of claims 1 to 7, wherein
the longitudinal sliding detection device (61) is configured to detect a slip ratio of the first wheel (14, 82) as the longitudinal sliding degree of the first wheel (14, 82), and
the controller (61) is configured to perform the first antilock brake operation by controlling the first brake device (30A, 30B) such that the slip ratio of the first wheel (14, 82) detected by the longitudinal sliding detection device (61) becomes close to a first target slip ratio as the first target longitudinal sliding degree, and to correct the first antilock brake operation by changing the first target slip ratio such that the larger the lateral sliding degree of the first wheel (14, 82) detected by the lateral sliding detection device (50) is, the smaller the first target slip ratio is, as the first correction process.

**12.** The brake control device (200) according to any one of claims 8 to 10, wherein
the longitudinal sliding detection device (61) is configured to detect slip ratios of the respective first and second wheels (14, 82) as the respective longitudinal sliding degrees of the first and second wheels (14, 82), and
the controller (61) is configured to perform the first antilock brake operation by controlling the first brake device (30A, 30B) such that the slip ratio of the first wheel (14, 82) detected by the longitudinal sliding detection device (61) becomes close to a first target slip ratio as the first target longitudinal sliding degree, to perform the second antilock brake operation by controlling the second brake device such that the slip ratio of the second wheel (14, 82) detected by the longitudinal sliding detection device (61) becomes close to a second target slip ratio as the second target longitudinal sliding degree, to correct the first antilock brake operation by changing the first target slip ratio such that the larger the lateral sliding degree of the first wheel (14, 82) detected by the lateral sliding detection device (50) is, the smaller the first target slip ratio is, as the first correction process, and to correct the second antilock brake operation by changing the second target slip ratio such that the larger the lateral sliding degree of the second wheel (14, 82) detected by the lateral sliding detection device (50) is, the smaller the second target slip ratio is, as the second correction process.

**13.** A straddled vehicle (100) comprising:

the first wheel (14, 82); and
the brake control device (200) according to any one of claims 1 to 7, and 11.

**14.** A straddled vehicle (100) comprising:

the first and second wheels (14, 82); and
the brake control device (200) according to any one of claims 8 to 10, and 12.

**Patentansprüche**

**1.** Eine Bremssteuervorrichtung (200) für ein rittlings zu fahrendes Fahrzeug (100) mit einem ersten Rad (14, 82), die folgende Merkmale aufweist:

eine erste Bremsvorrichtung (30A, 30B), die dazu konfiguriert ist, das erste Rad (14, 82) mit Bremskraft zu versorgen;
eine Längsrutschdetektionsvorrichtung (61), die dazu konfiguriert ist, einen Längsrutschgrad des ersten Rads (14, 82) zu detektieren;
eine Seitenrutschdetektionsvorrichtung (50), die dazu konfiguriert ist, einen Seitenrutschgrad des ersten Rads (14, 82) zu detektieren; und
eine Steuerung (61) zum Durchführen eines ersten Antiblockierbremsvorgangs, die die erste Bremsvorrichtung derart steuert, dass der Längsrutschgrad des ersten Rads (14, 82), der durch die Längsrutschdetektionsvorrichtung (61) detektiert wird, einem ersten Ziellängsrutschgrad nahekommt, wobei
die Steuerung (61) dazu konfiguriert ist, einen ersten Korrekturprozess durchzuführen, der den ersten Antiblockierbremsvorgang korrigiert, um auf der Basis eines Ergebnisses der Detektion der Seitenrutschdetektionsvorrichtung (50) ein seitliches Rutschen des ersten Rads (14, 82) zu unterbinden,
wobei die Steuerung (61) dazu konfiguriert ist, als ersten Korrekturprozess den ersten Antiblockierbremsvorgang derart zu korrigieren, dass der Längsrutschgrad des ersten Rads (14, 82) umso geringer ausfällt, je größer der Seitenrutschgrad des ersten Rads (14, 82), der durch die Seitenrutschdetektionsvorrichtung (50) detektiert wird, ist.

**2.** Die Bremssteuervorrichtung (200) gemäß Anspruch 1, bei der
die Seitenrutschdetektionsvorrichtung (50) dazu konfiguriert, eine Seitenrutschbeschleunigung des ersten Rads (14, 82) als den Seitenrutschgrad des ersten Rads (14, 82) zu detektieren, und
die Steuerung (61) dazu konfiguriert ist, als ersten Korrekturprozess den ersten Antiblockierbremsvorgang zu korrigieren, indem sie den ersten Ziellängsrutschgrad derart verändert, dass der erste Ziellängsrutschgrad umso geringer ausfällt, je größer der Betrag der Seitenrutschbeschleunigung des ersten Rads (14, 82), die durch die Seitenrutschdetektionsvorrichtung (50) detektiert wird, ist.

3. Die Bremssteuervorrichtung (200) gemäß Anspruch 2, bei der
die Steuerung (61) dazu konfiguriert ist, den ersten Ziellängsrutschgrad derart zu ändern, dass der erste Ziellängsrutschgrad von einem dritten Wert auf einen vierten Wert abnimmt, der kleiner ist als der dritte Wert, während der Betrag der Seitenrutschbeschleunigung des ersten Rads (14, 82), die durch die Seitenrutschdetektionsvorrichtung (50) detektiert wird, zunimmt, wenn der Betrag der Seitenrutschbeschleunigung des ersten Rads (14, 82), die durch die Seitenrutschdetektionsvorrichtung (50) detektiert wird, in einem Bereich zwischen einem ersten Wert und einem zweiten Wert, der größer ist als der erste Wert, liegt.

4. Die Bremssteuervorrichtung (200) gemäß Anspruch 3, bei der
die Steuerung (61) dazu konfiguriert ist, den ersten Ziellängsrutschgrad auf den dritten Wert festzulegen, wenn der Betrag der Seitenrutschbeschleunigung des ersten Rads (14, 82), die durch die Seitenrutschdetektionsvorrichtung (50) detektiert wird, nicht größer ist als der erste Wert.

5. Die Bremssteuervorrichtung (200) gemäß Anspruch 3 oder 4, bei der
die Steuerung (61) dazu konfiguriert ist, den ersten Ziellängsrutschgrad auf den vierten Wert festzulegen, wenn der Betrag der Seitenrutschbeschleunigung des ersten Rads (14, 82), die durch die Seitenrutschdetektionsvorrichtung (50) detektiert wird, nicht geringer ist als der zweite Wert.

6. Die Bremssteuervorrichtung (200) gemäß einem der Ansprüche 3 bis 5, die ferner einen Speicher (62) aufweist, der dazu konfiguriert ist, eine Korrespondenzbeziehung zwischen dem Betrag der Seitenrutschbeschleunigung des ersten Rads (14, 82) und einem Ziellängsrutschgrad zu speichern, wobei
die Korrespondenzbeziehung im Voraus derart festgelegt wird, dass der Ziellängsrutschgrad von dem dritten Wert auf den vierten Wert sinkt, während der Betrag der Seitenrutschbeschleunigung des ersten Rads (14, 82) zunimmt, und
die Steuerung (61) dazu konfiguriert ist, als ersten Korrekturprozess den Ziellängsrutschgrad, der dem Betrag der Seitenrutschbeschleunigung des ersten Rads (14, 82), die durch die Seitenrutschdetektionsvorrichtung (50) detektiert wird, entspricht, aus der in dem Speicher gespeicherten Korrespondenzbeziehung zu gewinnen und den gewonnenen Ziellängsrutschgrad als den ersten Ziellängsrutschgrad festzulegen.

7. Die Bremssteuervorrichtung (200) gemäß Anspruch 1, bei der
die Seitenrutschdetektionsvorrichtung (50) dazu konfiguriert ist, einen Schräglaufwinkel des ersten Rads (14, 82) als den Seitenrutschgrad des ersten Rads (14, 82) zu detektieren, und
die Steuerung (61) dazu konfiguriert ist, als ersten Korrekturprozess den ersten Antiblockierbremsvorgang zu korrigieren, indem sie den ersten Ziellängsrutschgrad derart verändert, dass der erste Ziellängsrutschgrad umso geringer ausfällt, je größer der Betrag des Schräglaufwinkels des ersten Rads (14, 82), der durch die Seitenrutschdetektionsvorrichtung (50) detektiert wird, ist.

8. Die Bremssteuervorrichtung (200) gemäß einem Ansprüche 1 bis 7, bei der
das rittlings zu fahrende Fahrzeug (100)
ferner ein zweites Rad (14, 82) aufweist und
ferner eine zweite Bremsvorrichtung (30A, 30B), die das zweite Rad (14, 82) mit der Bremskraft versorgt, aufweist,
die Längsrutschdetektionsvorrichtung (61) dazu konfiguriert ist, einen Längsrutschgrad des zweiten Rads (14, 82) zu detektieren;
die Seitenrutschdetektionsvorrichtung (50) dazu konfiguriert ist, einen Seitenrutschgrad des zweiten Rads (14, 82) zu detektieren, und
die Steuerung (61) dazu konfiguriert ist, einen zweiten Antiblockierbremsvorgang durchzuführen, um die zweite Bremsvorrichtung derart zu steuern, dass der Längsrutschgrad des zweiten Rads (14, 82), der durch die Längsrutschdetektionsvorrichtung (61) detektiert wird, einem zweiten Ziellängsrutschgrad nahekommt, und einen zweiten Korrekturprozess durchzuführen, um den zweiten Antiblockierbremsvorgang zu korrigieren, indem sie den zweiten Ziellängsrutschgrad derart verändert, dass der zweite Ziellängsrutschgrad umso geringer ausfällt, je größer der Seitenrutschgrad des zweiten Rads (14, 82), die durch die Seitenrutschdetektionsvorrichtung (50) detektiert wird, ist.

9. Die Bremssteuervorrichtung (200) gemäß Anspruch 8, bei der
die Steuerung (61) dazu konfiguriert ist, die Bremskraft durch die zweite Bremsvorrichtung zu erhöhen, um zumindest einen Teil eines Umfangs einer Abnahme der Bremskraft durch die erste Bremsvorrichtung (30A, 30B) zu kompensieren, wobei das Ausmaß der Abnahme durch Durchführen des ersten Korrekturprozesses erzeugt wird, wenn der erste Antiblockierbremsvorgang durchgeführt wird und der zweite Antiblockierbremsvorgang nicht durchgeführt wird.

10. Die Bremssteuervorrichtung (200) gemäß Anspruch 8 oder 9, bei der
die Steuerung (61) dazu konfiguriert ist, die Bremskraft durch die erste Bremsvorrichtung (30A, 30B) zu erhöhen, um zumindest einen Teil eines Umfangs einer Abnahme der Bremskraft durch die zweite Bremsvorrichtung zu kompensieren, wobei das Ausmaß der Abnahme durch Durchführen des zweiten Korrekturprozesses erzeugt wird, wenn der zweite Antiblockierbremsvorgang durchgeführt wird und der erste Antiblockierbremsvorgang nicht durchgeführt wird.

11. Die Bremssteuervorrichtung (200) gemäß einem der Ansprüche 1 bis 7, bei der
die Längsrutschdetektionsvorrichtung (61) dazu konfiguriert ist, ein Schlupfverhältnis des ersten Rads (14, 82) als den Längsrutschgrad des ersten Rads (14, 82) zu detektieren, und
die Steuerung (61) dazu konfiguriert ist, den ersten Antiblockierbremsvorgang durchzuführen, indem sie die erste Bremsvorrichtung (30A, 30B) derart steuert, dass das Schlupfverhältnis des ersten Rads (14, 82), das durch die Längsrutschdetektionsvorrichtung (61) detektiert wird, einem ersten Zielschlupfverhältnis als dem ersten Ziellängsrutschgrad nahekommt, und als ersten Korrekturprozess den ersten Antiblockierbremsvorgang zu korrigieren, indem sie das erste Zielschlupfverhältnis derart ändert, dass das erste Zielschlupfverhältnis umso kleiner ist, je größer der Seitenrutschgrad des ersten Rads (14, 82), der durch die Seitenrutschdetektionsvorrichtung (50) detektiert wird, ist.

12. Die Bremssteuervorrichtung (200) gemäß einem der Ansprüche 8 bis 10, bei der
die Längsrutschdetektionsvorrichtung (61) dazu konfiguriert ist, jeweilige Schlupfverhältnisse des ersten und des zweiten Rads (14, 82) als den jeweiligen Längsrutschgrad des ersten und des zweiten Rads (14, 82) zu detektieren, und
die Steuerung (61) dazu konfiguriert ist, den ersten Antiblockierbremsvorgang durchzuführen, indem sie die erste Bremsvorrichtung (30A, 30B) derart steuert, dass das Schlupfverhältnis des ersten Rads (14, 82), das durch die Längsrutschdetektionsvorrichtung (61) detektiert wird, einem ersten Zielschlupfverhältnis als dem ersten Ziellängsrutschgrad nahekommt, den zweiten Antiblockierbremsvorgang durchzuführen, indem sie die zweite Bremsvorrichtung derart steuert, dass das Schlupfverhältnis des zweiten Rads (14, 82), das durch die Längsrutschdetektionsvorrichtung (61) detektiert wird, einem zweiten Zielschlupfverhältnis als dem zweiten Ziellängsrutschgrad nahekommt, als ersten Korrekturprozess den ersten Antiblockierbremsvorgang zu korrigieren, indem sie das erste Zielschlupfverhältnis derart ändert, dass das erste Zielschlupfverhältnis umso kleiner ist, je größer der Seitenrutschgrad des ersten Rads (14, 82), der durch die Seitenrutschdetektionsvorrichtung (50) detektiert wird, ist, und als zweiten Korrekturprozess den zweiten Antiblockierbremsvorgang zu korrigieren, indem sie das zweite Zielschlupfverhältnis derart ändert, dass das zweite Zielschlupfverhältnis umso kleiner ist, je größer der Seitenrutschgrad des zweiten Rads (14, 82), der durch die Seitenrutschdetektionsvorrichtung (50) detektiert wird, ist.

13. Ein rittlings zu fahrendes Fahrzeug (100), das folgende Merkmale aufweist:

das erste Rad (14, 82); und
die Bremssteuervorrichtung (200) gemäß einem der Ansprüche 1 bis 7 und 11.

14. Ein rittlings zu fahrendes Fahrzeug (100), das folgende Merkmale aufweist:

das erste und das zweite Rad (14, 82); und
die Bremssteuervorrichtung (200) gemäß einem der Ansprüche 8 bis 10 und 12.

## Revendications

1. Dispositif de commande de frein (200) pour un véhicule de type à selle (100) présentant une première roue (14, 82), comprenant:

un premier dispositif de frein (30A, 30B) configuré pour alimenter une force de freinage vers la première roue (14, 82);
un dispositif de détection de dérapage longitudinal (61) configuré pour détecter un degré de dérapage longitudinal de la première roue (14, 82);
un dispositif de détection de dérapage latéral (50) configuré pour détecter un degré de dérapage latéral de la première roue (14, 82); et

un dispositif de commande (61) destiné à effectuer une première opération de freinage antiblocage qui commande le premier dispositif de frein de sorte que le degré de dérapage longitudinal de la première roue (14, 82) détecté par le dispositif de détection de dérapage longitudinal (61) se rapproche d'un premier degré de dérapage longitudinal cible, dans lequel

le dispositif de commande (61) est configuré pour effectuer un premier processus de correction qui corrige la première opération de freinage antiblocage pour empêcher le dérapage latéral de la première roue (14, 82) sur base du résultat de détection du dispositif de détection de dérapage latéral (50),

dans lequel le dispositif de commande (61) est configuré pour corriger la première opération de freinage antiblocage de sorte que plus le degré de dérapage latéral de la première roue (14, 82) détecté par le dispositif de détection de dérapage latéral (50) est grand, plus le degré de dérapage longitudinal de la première roue (14, 82) soit faible, comme premier processus de correction.

2. Dispositif de commande de frein (200) selon la revendication 1, dans lequel

le dispositif de détection de dérapage latéral (50) est configuré pour détecter une accélération de dérapage latéral de la première roue (14, 82) comme degré de dérapage latéral de la première roue (14, 82), et

le dispositif de commande (61) est configuré pour corriger la première opération de freinage antiblocage en modifiant le premier degré de dérapage longitudinal cible de sorte que plus l'amplitude de l'accélération de dérapage latéral de la première roue (14, 82) détectée par le dispositif de détection de dérapage latéral (50) est grande, plus le premier degré de dérapage longitudinal cible soit faible, comme premier processus de correction,

3. Dispositif de commande de frein (200) selon la revendication 2, dans lequel

le dispositif de commande (61) est configuré pour modifier le premier degré de dérapage longitudinal cible de sorte que le premier degré de dérapage longitudinal cible diminue d'une troisième valeur à une quatrième valeur inférieure à la troisième valeur au fur et à mesure que l'amplitude de l'accélération de dérapage latéral de la première roue (14, 82) détectée par le dispositif de détection de dérapage latéral (50) augmente lorsque l'amplitude de l'accélération de dérapage latéral de la première roue (14, 82) détectée par le dispositif de détection de dérapage latéral (50) se situe dans une plage comprise entre une première valeur et une deuxième valeur supérieure à la première valeur.

4. Dispositif de commande de frein (200) selon la revendication 3, dans lequel

le dispositif de commande (61) est configuré pour régler le premier degré de dérapage longitudinal cible à la troisième valeur lorsque l'amplitude de l'accélération de dérapage latéral de la première roue (14, 82) détectée par le dispositif de détection de dérapage latéral (50) n'est pas supérieure à la première valeur.

5. Dispositif de commande de frein (200) selon la revendication 3 ou 4, dans lequel

le dispositif de commande (61) est configuré pour régler le premier degré de dérapage longitudinal cible à la quatrième valeur lorsque l'amplitude de l'accélération de dérapage latéral de la première roue (14, 82) détectée par le dispositif de détection de dérapage latéral (50) n'est pas inférieure à la deuxième valeur.

6. Dispositif de commande de frein (200) selon l'une quelconque des revendications 3 à 5, comprenant par ailleurs une mémoire (62) configurée pour mémoriser un rapport de correspondance entre l'amplitude de l'accélération de dérapage latéral de la première roue (14, 82) et un degré de dérapage longitudinal cible, dans lequel

le rapport de correspondance est réglé à l'avance de sorte que le degré de dérapage longitudinal cible diminue de la troisième valeur à la quatrième valeur au fur et à mesure que l'amplitude de l'accélération de dérapage latéral de la première roue (14, 82) augmente, et

le dispositif de commande (61) est configuré pour acquérir le degré de dérapage longitudinal cible correspondant à l'amplitude de l'accélération de dérapage latéral de la première roue (14, 82) détectée par le dispositif de détection de dérapage latéral (50) à partir du rapport de correspondance mémorisé dans la mémoire, et pour régler le degré de dérapage longitudinal cible acquis comme premier degré de dérapage longitudinal cible comme premier processus de correction.

7. Dispositif de commande de frein (200) selon la revendication 1, dans lequel

le dispositif de détection de dérapage latéral (50) est configuré pour détecter un angle de dérive de la première roue (14, 82) comme degré de dérapage latéral de la première roue (14, 82), et

le dispositif de commande (61) est configuré pour corriger la première opération de freinage antiblocage en modifiant le premier degré de dérapage longitudinal cible de sorte que plus l'amplitude de l'angle de dérive de la première roue (14, 82) détectée par le dispositif de détection de dérapage latéral (50) est grande, plus le premier degré de dérapage longitudinal cible soit faible, comme premier processus de correction.

8. Dispositif de commande de frein (200) selon l'une quelconque des revendications 1 à 7, dans lequel le véhicule de type à selle (100) présente par ailleurs une deuxième roue (14, 82), et comprend par ailleurs un deuxième dispositif de frein (30A, 30B) qui alimente la force de frein vers la deuxième roue (14, 82), le dispositif de détection de dérapage longitudinal (61) est configuré pour détecter un degré de dérapage longitudinal de la deuxième roue (14, 82), le dispositif de détection de dérapage latéral (50) est configuré pour détecter un degré de dérapage latéral de la deuxième roue (14, 82), et le dispositif de commande (61) est configuré pour effectuer une deuxième opération de freinage antiblocage pour commander le deuxième dispositif de frein de sorte que le degré de dérapage longitudinal de la deuxième roue (14, 82) détecté par le dispositif de détection de dérapage longitudinal (61) se rapproche d'un deuxième degré de dérapage longitudinal cible, et pour effectuer un deuxième processus de correction pour corriger la deuxième opération de freinage antiblocage en modifiant le deuxième degré de dérapage longitudinal cible de sorte que plus le degré de dérapage latéral de la deuxième roue (14, 82) détecté par le dispositif de détection de dérapage latéral (50) est grand, plus le deuxième degré de dérapage longitudinal cible soit faible.

9. Dispositif de commande de frein (200) selon la revendication 8, dans lequel le dispositif de commande (61) est configuré pour augmenter la force de freinage par le deuxième dispositif de frein pour compenser au moins une partie d'une diminution de la force de freinage par le premier dispositif de frein (30A, 30B), la quantité de diminution étant générée par la réalisation du premier processus de correction lorsque la première opération de freinage antiblocage est effectuée et que la deuxième opération de freinage antiblocage n'est pas effectuée.

10. Dispositif de commande de frein (200) selon la revendication 8 ou 9, dans lequel le dispositif de commande (61) est configuré pour augmenter la force de freinage exercée par le premier dispositif de frein (30A, 30B) pour compenser au moins une partie d'une quantité de diminution de la force de freinage par le deuxième dispositif de frein, la quantité de diminution étant générée par la réalisation du deuxième processus de correction lorsque la deuxième opération de freinage antiblocage est effectuée et que la première opération de freinage antiblocage n'est pas effectuée.

11. Dispositif de commande de frein (200) selon l'une quelconque des revendications 1 à 7, dans lequel le dispositif de détection de dérapage longitudinal (61) est configuré pour détecter un taux de dérive de la première roue (14, 82) comme degré de dérapage longitudinal de la première roue (14, 82), et le dispositif de commande (61) est configuré pour effectuer la première opération de freinage antiblocage en commandant le premier dispositif de frein (30A, 30B) de sorte que le taux de dérive de la première roue (14, 82) détecté par le dispositif de détection de dérapage longitudinal (61) se rapproche d'un premier taux de dérive cible comme premier degré de dérapage longitudinal cible, et pour corriger la première opération de freinage antiblocage en modifiant le premier taux de dérive cible de sorte que plus le degré de dérapage latéral de la première roue (14, 82) détecté par le dispositif de détection de dérapage latéral (50) est grand, plus le premier taux de dérive cible soit faible, comme premier processus de correction.

12. Dispositif de commande de frein (200) selon l'une quelconque des revendications 8 à 10, dans lequel le dispositif de détection de dérapage longitudinal (61) est configuré pour détecter les taux de dérive des première et deuxième roues respectives (14, 82) comme degrés de dérapage longitudinal respectifs des première et deuxième roues (14, 82), et le dispositif de commande (61) est configuré pour effectuer la première opération de freinage antiblocage en commandant le premier dispositif de frein (30A, 30B) de sorte que le taux de dérive de la première roue (14, 82) détecté par le dispositif de détection de dérapage longitudinal (61) se rapproche d'un premier taux de dérive cible comme premier degré de dérapage longitudinal cible, pour effectuer la deuxième opération de freinage antiblocage en commandant le deuxième dispositif de frein de sorte que le taux de dérive de la deuxième roue (14, 82) détecté par le dispositif de détection de dérapage longitudinal (61) se rapproche d'un deuxième taux de dérive cible comme deuxième degré de dérapage longitudinal cible, pour corriger la première opération de freinage antiblocage en modifiant le premier taux de dérive cible de sorte que plus le degré de dérapage latéral de la première roue (14, 82) détecté par le dispositif de détection de dérapage latéral (50) est grand, plus le premier taux de dérive cible soit faible, comme premier processus de correction, et pour corriger la deuxième opération de freinage antiblocage en modifiant le deuxième taux de dérive cible de sorte que plus le degré de dérapage latéral de la deuxième roue (14, 82) détecté par le dispositif de détection de dérapage latéral (50) est grand, plus le deuxième taux de dérive cible soit faible, comme deuxième processus de correction.

13. Véhicule de type à selle (100) comprenant:

la première roue (14, 82); et
le dispositif de commande de frein (200) selon l'une quelconque des revendications 1 à 7 et 11.

14. Véhicule de type à selle (100) comprenant:

les première et deuxième roues (14, 82); et
le dispositif de commande de frein (200) selon l'une quelconque des revendications 8 à 10 et 12.

F I G . 1

FIG. 2

F I G. 3

GYROSCOPE — 41

LATERAL ACCELERATION SENSOR — 42

LONGITUDINAL ACCELERATION SENSOR — 43

FRONT WHEEL VELOCITY SENSOR — 44

REAR WHEEL VELOCITY SENSOR — 45

LATERAL SLIDING ACCELERATION DETECTION DEVICE — 50

CPU — 61
ROM — 62
RAM — 63
INTERFACE CIRCUIT — 64
60

（a）

NO ADJUSTMENT OF
WC FLUID PRESSURE

PUMP : STOPPED

HOLDING VALVE : OPEN

PRESSURE REDUCING
VALVE : CLOSED

（b）

DECREASE OF
WC FLUID PRESSURE

PUMP : IN OPERATION

HOLDING VALVE : CLOSED

PRESSURE REDUCING
VALVE : OPEN

（c）

INCREASE OF
WC FLUID PRESSURE

PUMP : IN OPERATION

HOLDING VALVE : OPEN

PRESSURE REDUCING
VALVE : CLOSED

FIG. 5

EP 2 977 281 B1

FIG. 6

(a)

100

82

14

bf1

(b)

100

82

14

bf2

(c)

100

82

14

bf3

bf4

F I G. 7

(a)

(b)

FIG. 8

TARGET SLIP RATIO TABLE

FIG. 9

```
                    ┌──────────────┐
                    │    START     │
                    └──────┬───────┘
                           │              ╭─ S11
                ┌──────────▼───────────┐
                │  SET TARGET SLIP RATIO │
                └──────────┬───────────┘
                           │              ╭─ S12
                ┌──────────▼───────────┐
                │   CALCULATE VEHICLE   │
                │    BODY VELOCITY      │
                └──────────┬───────────┘
                           │              ╭─ S13
                ┌──────────▼───────────┐
                │   CALCULATE CURRENT   │
                │     SLIP RATIO        │
                └──────────┬───────────┘
                           │         ╭─ S14
                        ◇─────────◇        YES
                  IS ABS FLAG ON?  ─────────────────┐
                        ◇─────────◇                 │
                           │ NO                      │
                           │         ╭─ S15          │
                        ◇─────────◇                 │
                      IS CURRENT                     │
                   SLIP RATIO LARGER    YES          │
                   THAN TARGET SLIP  ──────┐         │
                       RATIO?              │         │
                        ◇─────────◇        │         │
                           │ NO            │         │
                           ▼               ▼         ▼
                          (A)             (B)       (C)
```

F I G. 1 0

FINISH

FIG. 11

FIG. 12

FIG. 13

F I G. 1 4

```
                    ┌─────────────────┐
                    │      START      │
                    └────────┬────────┘
                             │
                             ▼                    ╭S31
              ┌──────────────────────────────┐
              │      SET TARGET SLIP RATIO    │
              │        OF FIRST WHEEL         │
              └──────────────┬───────────────┘
                             │
                             ▼                    ╭S32
              ┌──────────────────────────────┐
              │      CALCULATE VEHICLE        │
              │        BODY VELOCITY          │
              └──────────────┬───────────────┘
                             │
                             ▼                    ╭S33
              ┌──────────────────────────────┐
              │  CALCULATE CURRENT SLIP RATIO │
              │        OF FIRST WHEEL         │
              └──────────────┬───────────────┘
                             │
                             ▼            ╭S34
                       ◇───────────◇
                      ╱   IS ABS     ╲         YES
                     ◇  FLAG OF FIRST  ◇─────────────┐
                      ╲  WHEEL ON?    ╱              │
                       ◇───────────◇                │
                             │ NO                    │
                             ▼                       │
                     ◇───────────────◇  ╭S35         │
                    ╱       IS         ╲             │
                   ╱   CURRENT SLIP     ╲   YES       │
                  ◇  RATIO OF FIRST WHEEL ◇──────┐    │
                   ╲ LARGER THAN TARGET SLIP╱     │    │
                    ╲    RATIO OF FIRST    ╱      │    │
                     ╲       WHEEL?       ╱       │    │
                      ◇─────────────────◇        │    │
                             │ NO                 │    │
                             ▼                    ▼    ▼
                            (D)                  (E)  (F)
```

FIG. 15

D                    E                    F

SET ABS FLAG OF ─S38
FIRST WHEEL ON

STORE 0 AS AMOUNT OF ─S36
DECREASE OF BRAKE
FORCE OF FIRST WHEEL

IS ─S41
CURRENT SLIP
RATIO OF FIRST WHEEL          YES
LARGER THAN TARGET SLIP
RATIO OF FIRST
WHEEL?

BRAKE FORCE ─S37
COMPENSATION PROCESS

NO

INCREASE WC FLUID ─S42
PRESSURE OF
FIRST WHEEL

DECREASE WC FLUID ─S45
PRESSURE OF
FIRST WHEEL

HAS ─S43
PREDETERMINED
TIME PERIOD ELAPSED          NO
SINCE START OF INCREASE
OF WC FLUID PRESSURE
OF FIRST
WHEEL?

YES

SET ABS FLAG OF ─S44
FIRST WHEEL OFF

CALCULATE AMOUNT OF ─S46
DECREASE OF BRAKE
FORCE OF FIRST WHEEL
AND STORE RESULT OF
CALCULATION

FINISH

F I G. 1 6

```
┌─────────────────┐
│      START      │
└─────────────────┘
          │
          ▼                          ┌ S51
┌────────────────────────────────┐
│  CALCULATE NECESSARY MAGNITUDE │
│  OF WC FLUID PRESSURE OF FIRST │
│    WHEEL IN ORDER TO ACQUIRE   │
│    BRAKE FORCE EQUIVALENT TO   │
│  AMOUNT OF DECREASE OF BRAKE   │
│    FORCE OF SECOND WHEEL       │
└────────────────────────────────┘
          │
          ▼                          ┌ S52
┌────────────────────────────────┐
│  INCREASE WC FLUID PRESSURE OF │
│  FIRST WHEEL IN RANGE IN WHICH │
│    SLIP RATIO DOES NOT EXCEED  │
│    TARGET SLIP RATIO BASED ON  │
│  CALCULATED WC FLUID PRESSURE  │
└────────────────────────────────┘
          │
          ▼
┌─────────────────┐
│     FINISH      │
└─────────────────┘
```

FIG. 17

LATERAL SLIDING ACCELE-RATION

LATETAL SLIDING ACCELERATION GENERATED AT FIRST WHEEL

TIME

BRAKE FORCE

BRAKE FORCE SUPPLIED TO FIRST WHEEL

BRAKE FORCE SUPPLIED TO SECOND WHEEL

TIME

VELOCITY

VEHICLE BODY VELOCITY

PERIPHERAL VELOCITY OF FIRST WHEEL

CONVERTED TARGET SLIP RATIO OF FIRST WHEEL

TIME

WC FLUID PRESSURE

WC FLUID PRESSURE OF FIRST WHEEL

WC FLUID PRESSURE OF SECOND WHEEL

TIME

t1  t2  t3  t4  t5  t6  t7  t9  t11 t12 t13

t8  t10

46

FIG. 18

WC FLUID PRESSURE DECREASE RATE TABLE

DECREASE RATE OF
WC FLUID PRESSURE

| LATERAL SLIDING
ACCELERATION |

FIG. 19

LATERAL SLIDING ACCELE-RATION

TIME

VELOCITY

VEHICLE BODY VELOCITY

PERIPHERAL VELOCITY OF WHEEL

AVERAGE PERIPHERAL VELOCITY

CONVERTED FIXED TARGET SLIP RATIO

TIME

WC FLUID PRESSURE

TIME

t1    t2  t3   t4  t5   t6 t7    t8   t10    t12   TIME

t9      t11

**EP 2 977 281 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004155412 A
- JP 2590024 B
- JP 2216355 A
- JP 7002077 A
- WO 2013014945 A1